# EUROPEAN PATENT APPLICATION

(11) **EP 4 184 604 A1**
(43) Date of publication of application: **24.05.2023**
(21) Application number: 22207890.9
(22) Date of filing: 16.11.2022
(51) Int. Cl.: H01M 4/04, H01M 4/133, H01M 4/1393, H01M 4/1395, H01M 4/36, H01M 4/38, H01M 4/40, H01M 4/587, H01M 4/62, H01M 10/052, H01M 10/0562, H01M 4/02

(54) **NEGATIVE ELECTRODE FOR ALL-SOLID SECONDARY BATTERY, ALL-SOLID SECONDARY BATTERY INCLUDING NEGATIVE ELECTRODE, AND METHOD OF PREPARING ALL-SOLID SECONDARY BATTERY**

(30) Priority: 18.11.2021 KR 20210159788; 15.11.2022 KR 20220152744
(71) Applicant: Samsung Electronics Co., Ltd., Gyeonggi-do 16677 (KR)
(72) Inventor: KIM, Sewon, 16678 Suwon-si (KR); YUN, Dongjin, 16678 Suwon-si (KR); HWANG, Seungsik, 16678 Suwon-si (KR); KO, Dongsu, 16678 Suwon-si (KR); KIM, Jusik, 16678 Suwon-si (KR); YOON, Gabin, 16678 Suwon-si (KR)
(74) Representative: Elkington and Fife LLP

(57) **Abstract**

A negative electrode-solid electrolyte sub-assembly for an all-solid secondary battery, the sub-assembly including: a negative electrode current collector; a first negative active material layer on the current collector; an interlayer on the first negative active material layer; and a solid electrolyte on the interlayer and opposite the first negative active material layer, wherein the interlayer includes a composite including a first metal material and a lithium ion conductor, wherein the first metal material includes a first metal, an alloy including the first metal and lithium, a compound including the first metal and lithium, or a combination thereof, wherein the first negative active material layer includes a carbonaceous negative active material, and optionally a first negative active material including a second metal, a metalloid, or a combination thereof.

## Description

### FIELD OF THE INVENTION

The present disclosure relates to a negative electrode for an all-solid secondary battery, an all-solid secondary battery including the negative electrode, and a method of preparing the all-solid secondary battery.

### BACKGROUND OF THE INVENTION

Recently, batteries having high energy density and excellent safety have actively been developed due to industrial demand. For example, lithium-ion batteries have been put into practical use in the fields of information-related devices and communication devices, and also in the automotive field. In the automotive field, safety is especially important to avoid injury or loss of life.

Lithium-ion batteries currently available in the market use an electrolytic solution containing a flammable organic solvent, and thus, when a short circuit occurs, there is a possibility of overheating and the occurrence of fires. Accordingly, all-solid secondary batteries using solid electrolytes have been proposed.

Since all-solid secondary batteries do not use a flammable organic solvent, even if a short circuit occurs, the possibility of causing a fire or an explosion may be greatly reduced. Therefore, all-solid secondary batteries may greatly improve safety, as compared with lithium-ion batteries using an electrolytic solution.

In order to increase the energy density of such all-solid secondary batteries, lithium metal may be used as a negative active material. For example, it is known that the capacity density (capacity per unit volume) of lithium metal is about 10 times that of graphite, which is also used as a negative active material. Therefore, it may be possible to increase capacity while reducing the volume of the all-solid secondary battery by using lithium metal as a negative active material.

Nonetheless, there remains a need for improved battery materials.

### SUMMARY OF THE INVENTION

Provided is a negative electrode-solid electrolyte sub-assembly for an all-solid secondary battery in which short circuit is prevented, and rate capability and lifespan characteristics are improved.

Provided is an all-solid secondary battery with improved cell performance by including the negative electrode-solid electrolyte sub-assembly, and a method of preparing the all-solid secondary battery.

Additional aspects will be set forth in part in the description which follows and, in part, will be apparent from the description, or may be learned by practice of the presented embodiments of the disclosure.

According to an aspect, a negative electrode-solid electrolyte sub-assembly for an all-solid secondary battery includes: a negative electrode current collector; a first negative active material layer on the current collector; an interlayer on the first negative active material layer; and a solid electrolyte on the interlayer and opposite the first negative active material layer, wherein the interlayer includes a composite including a first metal material and a lithium ion conductor, wherein the first metal material includes a first metal, an alloy including the first metal and lithium, a compound including the first metal and lithium, or a combination thereof, wherein the first negative active material layer includes a carbonaceous negative active material, and optionally a first negative active material comprising a second metal, a metalloid, or a combination thereof.

A thickness of the interlayer may be 1 micrometer (µm) or less, and a thickness of the first negative active material layer may be in a range of about 1 µm to about 10 µm.

A volume of the first negative active material layer after charging the all-solid secondary battery may be 200 percent (%) or less than a volume of the first negative active material layer after discharging.

The first metal may be tin, indium, silicon, gallium, aluminum, titanium, zirconium, niobium, germanium, antimony, bismuth, zinc, gold, platinum, palladium, nickel, iron, cobalt, chromium, magnesium, cesium, cerium, molybdenum, silver, sodium, potassium, calcium, yttrium, tantalum, hafnium, barium, vanadium, strontium, tellurium, lanthanum, or a combination thereof.

The first metal material may be LiₓSn, wherein 0<x≤5, LiₓZn, wherein 0<x≤3, LiₓAl, wherein 0<x≤5, LixSb, wherein 0<x≤4, LixSi, wherein 0<x≤5, LixAu, wherein 0<x≤5, LixAg, wherein 0<x≤20, LiₓIn, wherein 0<x≤5, LixBi, wherein 0<x≤5, LixGa, wherein 0<x≤5, LixTe, wherein 0<x≤5, LixGe, wherein 0<x≤5, LixMg, wherein 0<x≤7, or a combination thereof.

The lithium ion conductor may be LiCI, LiBr, Lil, LiF, Li₂O, Li₂O₂, Li₃N, LiN₃, LiNO₃, LiClO₄, Li₃P, Li₃P₇, LiP, LiP₇, Li₃PO₄, Li₂S, LiS4, LiOH, Li₂CO₃ or a combination thereof.

The composite may comprise the first metal material dispersed in a matrix comprising the lithium ion conductor.

A size of the first metal material may be in a range of about 0.1 nanometer (nm) to about 300 nm.

The first metal material may be a Li-Ag alloy, a Li-Au alloy, a Li-AI alloy, a Li-Sn alloy, a Li-In alloy, a Li-Zn alloy, a Li-Ge alloy, a Li-Si alloy, a Li-Bi alloy, a Li-Ga alloy, a Li-Na alloy, a Li-K alloy, a Li-Te alloy, a Li-Mg alloy, a Li-Mo alloy, a Li-Sn-Bi alloy, a Li-Sn-Ag alloy, a Li-Sn-Na alloy, a Li-Sn-K alloy, a Li-Sn-Ca alloy, a Li-Te-Ag alloy, a Li-Sb-Ag alloy, a Li-Sn-Sb alloy, a Li-Sn-V alloy, a Li-Sn-Ni alloy, a Li-Sn-Cu alloy, a Li-Sn-Zn alloy, a Li-Sn-Ga alloy, a Li-Sn-Ge alloy, a Li-Sn-Sr alloy, a Li-Sn-Y alloy, a Li-Sn-Ba alloy, a Li-Sn-Au alloy, a Li-Sn-La alloy, a Li-AI-Ga alloy, a Li-Mg-Sn alloy, a Li-Mg-Al alloy, a Li-Mg-Si alloy, a Li-Mg-Zn alloy, a Li-Mg-Ga alloy, a Li-Mg-Ag alloy, or a combination thereof, and the lithium ion conductor may be LiCI, LiBr, Lil, LiF, Li₂O, Li₂O₂, Li₃N, LiNO₃, LiClO₄, or a combination thereof.

Also disclosed is a negative electrode-solid electrolyte sub-assembly for an all-solid secondary battery, the sub-assembly including: a negative electrode current collector; a first negative active material layer on the current collector; an interlayer on the first negative active material layer; and a solid electrolyte on the interlayer and opposite the first negative active material layer, wherein the interlayer includes a composite including a first metal material and a lithium ion conductor, wherein the first metal material includes a first metal, an alloy including the first metal and lithium, a compound including the first metal and lithium, or a combination thereof, wherein the first negative active material layer includes a carbonaceous negative active material, and optionally a first negative active material including a second metal, a metalloid, or a combination thereof, and wherein the negative electrode-solid electrolyte sub-assembly further includes a second negative active material layer between the negative electrode current collector and the first negative active material layer. The second negative active material layer may include a third metal, and the third metal may comprise a metal of a least one of lithium, silver, tin, indium, silicon, gallium, aluminum, titanium, zirconium, niobium, germanium, antimony, bismuth, zinc, gold, platinum, palladium, nickel, iron, cobalt, chromium, magnesium, cesium, cerium, molybdenum, lanthanum, tungsten, tellurium, a lithium alloy including lithium and silver, tin, indium, silicon, gallium, aluminum, titanium, zirconium, niobium, germanium, antimony, bismuth, zinc, gold, platinum, palladium, nickel, iron, cobalt, chromium, magnesium, cesium, cerium, molybdenum, lanthanum, tungsten, tellurium, or a combination thereof.

The second negative active material layer may be a product of charging of the all-solid secondary battery. The second negative active material layer may include a lithium metal, a lithium alloy, or a combination thereof.

According to an aspect, an all-solid secondary battery includes: a positive electrode; and the negative electrode-solid electrolyte sub-assembly on the positive electrode; wherein the solid electrolyte is between the positive electrode and the negative electrode.

According to an aspect, a method of preparing the all-solid secondary battery includes: providing a positive electrode; disposing a solid electrolyte on the positive electrode; disposing an interlayer on the solid electrolyte opposite the positive electrode; disposing a first negative active material layer on the interlayer, the first negative active material layer including a carbonaceous negative active material, and optionally a first negative active material including a second metal, a metalloid, or a combination thereof; and disposing a current collector on the first negative active material layer opposite the interlayer to prepare the all-solid secondary battery.

The disposing of the interlayer may include depositing a first metal on the solid electrolyte in an atmosphere of oxygen, nitrogen, or a combination of oxygen and nitrogen, to form a first layer, the first layer including a first metal oxide layer, a first metal nitride layer, a first metal nitrate layer, or a combination thereof; and using the first layer to dispose a composite including a lithium ion conductor and a lithium-first metal material alloy, to provide the interlayer.

Using the first layer may represent, for example, a reaction with lithium. To elaborate on this, the first layer (metal oxide layer) reacts with lithium during charging to form a lithium-metal alloy, or reacts with lithium when bonding the second negative active material layer (lithium metal layer) to finally form an intermediate layer.

When the composite containing the lithium-first metal alloy and the lithium ion conductor is disposed using the first layer, lithium may be generated after the charging process of the battery.

The disposing of the interlayer may include depositing a first metal on the solid electrolyte to form a deposited first metal, contacting the deposited first metal with a compound including a halide to form a first metal halide or a mixture of the first metal and the halide, to form a coated solid electrolyte; and drying coated solid electrolyte to dispose the interlayer, wherein the interlayer includes a composite including a lithium-first metal alloy and a lithium ion conductor comprising a lithium halide.

The compound including a halide may be HCI, HBr, HF, HI, or a combination thereof, and the first metal halide may be SnClₓ, wherein 0<x≤6, SnBrₓ wherein 0<x≤6, SnFx wherein 0<x≤6, SnIₓ wherein 0<x≤6, BiCl₃, Bi₆Cl₇, BiBrx wherein 0<x≤6, BiFx wherein 0<x≤6, Bilx wherein 0<x≤6, AgFx wherein 0<x≤4, , for example, 0<x≤2, AgClx wherein 0<x≤2, AgBrₓ wherein 0<x≤2, AgIₓ wherein 0<x≤2, or a combination thereof.

The disposing of the first negative active material layer may include providing a first substrate, coating a composition on the first substrate, the composition comprising, a carbonaceous negative active material, and optionally a first negative active material including a second metal, a metalloid, or a combination thereof, to provide a coated first substrate, drying the coated first substrate to provide a dried coated substrate, disposing the dried coated substrate on the interlayer, and removing the substrate to dispose the first negative active material layer.

During charge of the all-solid secondary battery, the second metal in the first negative active material layer may form an alloy with lithium.

The method of preparing the all-solid secondary battery may further include disposing a second negative active material layer between the negative current collector and the first negative active material layer, wherein the second negative active material layer may include a third metal.

The second negative active material layer may be a product of charging of the all-solid secondary battery, disposing the negative electrode current collector with the second negative active material layer to the first negative active material layer, or a combination thereof, wherein the second negative active material layer may include a lithium metal, a lithium alloy, or a combination thereof.

Also disclosed is an all-solid secondary battery including: a positive electrode; a negative electrode-solid electrolyte sub-assembly on the positive electrode; wherein the solid electrolyte is between the positive electrode and the negative electrode, wherein the negative electrode-solid electrolyte sub-assembly includes a negative electrode current collector, a first negative active material layer on the current collector, an interlayer on the first negative active material layer, and a solid electrolyte on the interlayer and opposite the first negative active material layer, wherein the interlayer includes a composite including a first metal material and a lithium ion conductor, wherein the first metal material includes a first metal, an alloy including the first metal and lithium, a compound including the first metal and lithium, or a combination thereof, wherein the first negative active material layer includes a carbonaceous negative active material, and optionally a first negative active material including a second metal, a metalloid, or a combination thereof, and wherein the negative electrode-solid electrolyte sub-assembly further includes a second negative active material layer between the negative electrode current collector and the first negative active material layer.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1A is a schematic view of an embodiment of a structure of a negative electrode-solid electrolyte sub-assembly of an all-solid secondary battery;
FIG. 1B is a schematic view of another embodiment of a structure of the negative electrode-solid electrolyte sub-assembly of the all-solid secondary battery;
FIG. 2A shows the results of a scanning electron microscopy (SEM) analysis on an all-solid secondary battery prepared in Example 1 after charging;
FIG. 2B is an enlarged view of the indicated area in FIG. 2A;
FIGS. 2C1-2C4 show the results of a scanning electron microscopy and energy dispersive X-ray spectroscopy (SEM-EDS) analysis of a solid electrolyte/interlayer/first negative active material layer/second negative active material layer assembly of an all-solid secondary battery prepared in Example 1 in which FIG. 2C1 is a secondary electron image, FIG. 2C2 is a Ag map, FIG. 2C3 is a C map, and FIG. 2C4 is a Sn map;
FIGS. 2D1-2D4 are enlarged views of the indicated area in FIG. 2C4 in which FIG. 2D1 is a secondary electron image, FIG. 2D2 is a Sn map, FIG. 2D3 is a C map, and FIG. 2D4 is a CI map;
FIG. 3A is a graph of potential (Volts vs. Li⁺/Li) vs. capacity per unit area (milliampere-hours per square centimeter, mAh/cm²) and shows charge and discharge characteristics of an all-solid secondary battery including a negative electrode-solid electrolyte sub-assembly according to Example 1;
FIG. 3B is a graph of capacity per unit area (milliampere-hours per square centimeter, mAh/cm²) vs. number of cycles (#) showing lifespan characteristics of the all-solid secondary battery including the negative electrode-solid electrolyte sub-assembly according to Example 1;
FIG. 3C is a graph of potential (Volts vs. Li⁺/Li) vs. capacity per unit area (milliampere-hours per square centimeter, mAh/cm²) and shows charge and discharge characteristics of an all-solid secondary battery including a negative electrode-solid electrolyte sub-assembly according to Example 2;
FIG. 3D is a graph of capacity per unit area (milliampere-hours per square centimeter, mAh/cm²) vs. number of cycles (#) showing lifespan characteristics of the all-solid secondary battery including the negative electrode-solid electrolyte sub-assembly according to Example 2;
FIG. 3E is a graph of potential (Volts vs. Li⁺/Li) vs. capacity per unit area (milliampere-hours per square centimeter, mAh/cm²) and shows charge and discharge characteristics of an all-solid secondary battery including a negative electrode-solid electrolyte sub-assembly according to Comparative Example 1;
FIG. 3F is a graph of capacity per unit area (milliampere-hours per square centimeter, mAh/cm²) vs. number of cycles (#) showing lifespan characteristics of the all-solid secondary battery including the negative electrode according to Comparative Example 1;
FIG. 3G is a graph of potential (Volts vs. Li⁺/Li) vs. capacity per unit area (milliampere-hours per square centimeter, mAh/cm²) and shows charge and discharge characteristics of an all-solid secondary battery including a negative electrode-solid electrolyte sub-assembly according to Comparative Example 1;
FIG. 3H is a graph of potential (Volts vs. Li⁺/Li) vs. capacity per unit area (milliampere-hours per square centimeter, mAh/cm²) and shows charge and discharge characteristics of an all-solid secondary battery including a negative electrode-solid electrolyte sub-assembly according to Comparative Example 2;
FIG. 3I is a graph of capacity per unit area (milliampere-hours per square centimeter, mAh/cm²) vs. number of cycles (#) showing lifespan characteristics of the all-solid secondary battery including the negative electrode-solid electrolyte sub-assembly according to Comparative Example 2;
FIGS. 4A1-4A3 show results of an SEM-EDS analysis on the all-solid secondary battery including the negative electrode-solid electrolyte sub-assembly according to Example 1 in which FIG. 4A1 is a secondary electron image, FIG. 4A2 is a carbon map, and FIG. 4A3 is a Sn and CI map;
FIGS. 4B1-4B3 show results of an SEM-EDS analysis on the all-solid secondary battery including the negative electrode-solid electrolyte sub-assembly according to Example 2 in which FIG. 4B1 is a secondary electron image, FIG. 4B2 is a carbon map, and FIG. 4B3 is a tin and oxygen map;
FIG. 4C shows results of an SEM analysis on the all-solid secondary battery including the negative electrode-solid electrolyte sub-assembly according to Comparative Example 1;
FIGS. 4D1-4D3 show results of an SEM-EDS analysis on the all-solid secondary battery including the negative electrode-solid electrolyte sub-assembly according to Comparative Example 2, in which FIG. 4D1 is a secondary electron image, FIG. 4D2 is a carbon map, and FIG. 4D3 is a zinc map;
FIG. 4E1 is an enlarged view of the indicated area in FIG. 4B3, and FIGS. 4E2-4E5 are enlarged views of the indicated area in FIG 4E1, in which 4E3 is a tin map, FIG. 4E4 is an oxygen map, and FIG. 4E5 is a carbon map;
FIGS. 4F1-4F5 show results of a transmission electron microscopy-energy dispersive X-ray spectroscopy (TEM-EDS) analysis on the all-solid secondary battery including the negative electrode-solid electrolyte sub-assembly according to Example 2, in which FIG. 4F2 is an enlarged view of portion of FIG. 4F1, FIG. 4F3 is a tin map, FIG. 4F4 is a lithium map, and FIG. 4F5 is an oxygen map of FIG. 4F2;
FIG. 5A is a graph of imaginary impedance (Z", ohms per square centimeter, Ωcm²) vs. real impedance (Z', Ωcm²) that shows a Nyquist plot illustrating results of impedance measurement on all-solid secondary batteries according to Examples 3 and 4 and Comparative Example 3;
FIG. 5B is a graph of potential (Volts vs. Li⁺/Li) vs. capacity per unit area (milliampere-hours per square centimeter, mAh/cm²) and shows charge and discharge characteristics of an all-solid secondary battery including a negative electrode-solid electrolyte sub-assembly according to Example 3;
FIG. 5C is a graph of potential (Volts vs. Li⁺/Li) vs. capacity per unit area (milliampere-hours per square centimeter, mAh/cm²) and shows charge and discharge characteristics of an all-solid secondary battery including a negative electrode-solid electrolyte sub-assembly according to Example 4;
FIG. 5D is a graph of potential (Volts vs. Li⁺/Li) vs. capacity per unit area (milliampere-hours per square centimeter, mAh/cm²) and shows charge and discharge characteristics of an all-solid secondary battery including a negative electrode-solid electrolyte sub-assembly according to Comparative Example 3;
FIG. 6A is a schematic view illustrating an embodiment of a structure of an all-solid secondary battery;
FIG. 6B is a schematic view illustrating another embodiment of a structure of an all-solid secondary battery; and
FIGS. 7A and 7B are each a graph of intensity (arbitrary units, a.u.) vs. binding energy (electron volts, eV) that shows analysis results of X-ray photoelectron spectroscopy (XPS) on a composite that is an interlayer-forming material prepared according to Example 1.

### DETAILED DESCRIPTION OF THE EMBODIMENTS

Reference will now be made in detail to embodiments, examples of which are illustrated in the accompanying drawings, wherein like reference numerals refer to like elements throughout the specification. In this regard, the present embodiments may have different forms and should not be construed as being limited to the descriptions set forth herein. Accordingly, the embodiments are merely described below, by referring to the figures, to explain various aspects. As used herein, "a", "an," "the," and "at least one" do not denote a limitation of quantity, and are intended to include both the singular and plural, unless the context clearly indicates otherwise. For example, "an element" has the same meaning as "at least one element," unless the context clearly indicates otherwise. "At least one" is not to be construed as limiting "a" or "an." "Or" means "and/or." As used herein, the term "and/or" includes any and all combinations of one or more of the associated listed items. Expressions such as "at least one of," when preceding a list of elements, modify the entire list of elements and do not modify the individual elements of the list.

Hereinafter, with reference to the attached drawings, a negative electrode-solid electrolyte sub-assembly for an all-solid secondary battery, an all-solid secondary battery including the negative electrode-solid electrolyte sub-assembly, and a method of preparing the all-solid secondary battery will be described in further detail. Like reference numerals in the drawings denote like components, and sizes of components in the drawings may be exaggerated for clarity and convenience of explanation. In addition, embodiments described herein are illustrative purposes only, and various changes in form and details may be made therein.

This invention may, however, be embodied in many different forms, and should not be construed as limited to the embodiments set forth herein. Rather, these embodiments are provided so that this disclosure will be thorough and complete, and will fully convey the scope of the invention to those skilled in the art.

It will be understood that when an element is referred to as being "on" another element, it can be directly on the other element or intervening elements may be present therebetween. In contrast, when an element is referred to as being "directly on" or "in contact with" another element, there are no intervening elements present.

It will be understood that, although the terms "first," "second," "third," etc. may be used herein to describe various elements, components, regions, layers, and/or sections, these elements, components, regions, layers, and/or sections should not be limited by these terms. These terms are only used to distinguish one element, component, region, layer, or section from another element, component, region, layer, or section. Thus, "a first element," "component," "region," "layer," or "section" discussed below could be termed a second element, component, region, layer, or section without departing from the teachings herein.

It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Furthermore, relative terms, such as "lower" or "bottom" and "upper" or "top," may be used herein to describe one element's relationship to another element as illustrated in the Figures. It will be understood that relative terms are intended to encompass different orientations of the device in addition to the orientation depicted in the Figures. For example, if the device in one of the figures is turned over, elements described as being on the "lower" side of other elements would then be oriented on "upper" sides of the other elements. The term "lower," can therefore, encompasses both an orientation of "lower" and "upper," depending on the particular orientation of the figure. Similarly, if the device in one of the figures is turned over, elements described as "below" or "beneath" other elements would then be oriented "above" the other elements. The terms "below" or "beneath" can, therefore, encompass both an orientation of above and below.

"About" or "approximately" as used herein is inclusive of the stated value and means within an acceptable range of deviation for the particular value as determined by one of ordinary skill in the art, considering the measurement in question and the error associated with measurement of the particular quantity (e.g., the limitations of the measurement system). For example, "about" can mean within one or more standard deviations, or within ± 30%, 20%, 10%, or 5% of the stated value. Endpoints of ranges may each be independently selected.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Embodiments are described herein with reference to cross section illustrations that are schematic illustrations of idealized embodiments. As such, variations from the shapes of the illustrations as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims.

In a battery in which a solid electrolyte is used, and lithium metal is used as a negative active material, lithium metal may be non-uniformly deposited on a surface of the solid electrolyte during a charge process, which may induce cracks in the solid electrolyte. While not wanting to be bound by theory, it is understood that cracks in the solid electrolyte may induce short circuit in all-solid secondary batteries.

To provide an all-solid secondary battery with reduced interfacial resistance between the negative electrode and the solid electrolyte, while preventing cracking of the solid electrolyte, an all-solid secondary battery has been proposed. In the proposed all-solid battery, a lithium metal layer is in contact with a negative electrode current collector, a negative active material layer including a carbonaceous active material is disposed on the lithium metal layer, and a contact layer including lithium metal is formed between the negative active material layer and a solid electrolyte layer.

However, in such an all-solid secondary battery, the contact layer is in contact with the solid electrolyte layer and comprises lithium metal. Thus, when reacting with the lithium metal during charge and discharge of the all-solid secondary battery, side reactions such as aggregation or volume expansion may occur, resulting in deterioration of lifespan characteristics.

To address the aforementioned problems, provided is a negative electrode for an all-solid secondary battery. The negative electrode is on a solid electrolyte, and thus may be referred to as a negative electrode-solid electrolyte sub-assembly. The negative electrode comprises: a negative electrode current collector; a first negative active material layer on the current collector; an interlayer on the first negative active material layer, and a solid electrolyte on the interlayer and opposite the first negative active material layer. The interlayer comprises a composite comprising a first metal material and a lithium ion conductor, wherein the first metal material comprises a first metal (M1), an alloy comprising the first metal and lithium, or a compound comprising the first metal and lithium, or a combination thereof, wherein the first negative active material layer comprises a carbonaceous negative active material, and optionally a first negative active material comprising a second metal (M2), a metalloid, or a combination thereof.

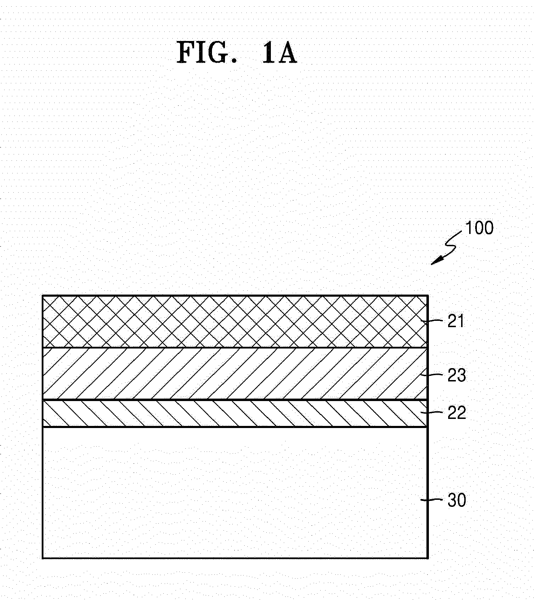

FIG. 1A is a schematic view of an embodiment of a negative electrode-solid electrolyte sub-assembly 100 for an all-solid secondary battery.

An interlayer 22 including a composite containing a first metal material comprising a first metal (M1) and a lithium ion conductor may be disposed on a solid electrolyte 30, and a first negative active material layer 23 is between the interlayer 22 and a negative electrode current collector 21. The first metal (M1) is a metal that forms an alloy or compound with lithium.

The interlayer 22 may contribute to maintaining durability, improving contact between the solid electrolyte 30 and the negative electrode, and reducing interfacial resistance between the solid electrolyte 30 and the first negative active material layer 23. The lithium ion conductor may serve as a matrix for maintaining a structure of the interlayer 22. The first negative active material layer is a buffer layer that may buffer volume expansion by lithium intercalation and deintercalation upon charge and discharge.

The term "matrix" as used herein refers to formation of a continuous phase comprising a lithium ion conductor. In an aspect, the matrix consists of the lithium ion conductor. The continuous phase refers to a phase that extends throughout the layer without a discontinuous region or discontinuity, such as an isolated island of the lithium ion conductor.

The composite may comprise the first metal (M1) dispersed in a matrix comprising a lithium ion conductor. In other words, the lithium ion conductor in the composite may be a continuous phase, with the first metal material disposed therein as a discontinuous phase, e.g., in the form of islands within the matrix.

The composite containing the first metal material and the lithium ion conductor may each have different a crystal structure and distinct physical properties, as compared with a simple mixture of the first metal material and the lithium ion conductor, or a core and shell structure comprising the first active material and the lithium ion conductor.

The first metal material may be, for example, a first metal (M1), a lithium-first metal (M1) alloy, or a combination thereof, wherein the first metal (M1) is a metal and may be tin (Sn), indium (In), silicon (Si), gallium (Ga), aluminum (Al), titanium (Ti), zirconium (Zr), niobium (Nb), germanium (Ge), antimony (Sb), bismuth (Bi), zinc (Zn), gold (Au), platinum (Pt), palladium (Pd), nickel (Ni), iron (Fe), cobalt (Co), chromium (Cr), magnesium (Mg), cesium (Cs), cerium (Ce), Molybdenum (Mo), silver (Ag), sodium (Na), potassium (K), calcium (Ca), yttrium (Y), tantalum (Ta), hafnium (Hf), barium (Ba), vanadium (V), strontium (Sr), tellurium (Te), lanthanum (La), or a combination thereof. Here, the term "metal" used herein includes metal and metalloid.

The first metal material may be, for example, a Li-Ag alloy, a Li-Au alloy, a Li-Al alloy, a Li-Sn alloy, a Li-In alloy, a Li-Zn alloy, a Li-Ge alloy, a Li-Te alloy, a Li-Ga alloy, a Li-Si alloy, a Li-Sb alloy, a Li-Bi alloy, a Li-Mg alloy, a Li-Na alloy, a Li-K alloy, a Li-Te alloy, a Li-Mo alloy, a Li-Sn-Bi alloy, a Li-Sn-Ag alloy, a Li-Sn-Na alloy, a Li-Sn-K alloy, a Li-Sn-Ca alloy, a Li-Te-Ag alloy, a Li-Sb-Ag alloy, a Li-Sn-Sb alloy, a Li-Sn-V alloy, a Li-Sn-Ni alloy, a Li-Sn-Cu alloy, a Li-Sn-Zn alloy, a Li-Sn-Ga alloy, a Li-Sn-Ge alloy, a Li-Sn-Sr alloy, a Li-Sn-Y alloy, a Li-Sn-Ba alloy, a Li-Sn-Au alloy, a Li-Sn-La alloy, a Li-AI-Ga alloy, a Li-Mg-Sn alloy, a Li-Mg-Al alloy, a Li-Mg-Si alloy, a Li-Mg-Zn alloy, a Li-Mg-Ga alloy, a Li-Mg-Ag alloy, or a combination thereof.

The first metal material may be, for example, LiₓSn (wherein 0<x≤5), LiₓZn (wherein 0<x≤5), LiₓAl (wherein 0<x≤5), LixSb (wherein 0<x≤4), LixSi (wherein 0<x≤5), LixAu (wherein 0<x≤5), LixAg (wherein 0<x≤10), LiₓIn (wherein 0<x≤5), LixBi (wherein 0<x≤5), LixGa (wherein 0<x≤5), LixTe (wherein 0<x≤5), LixGe (wherein 0<x≤5), LixMg (wherein 0<x≤7), Lor a combination thereof.

LiₓSn (wherein 0<x≤5) may be, for example, Li₄Sn, or Li_{4.4}Sn.

LiₓSi (wherein 0<x≤5) may be, for example, Li₄Si, or Li_{4.4}Si.

LiₓAg (wherein 0<x≤10) may be, for example, Li₃Ag, Li₁₀Ag₃, or Li₉Ag.

LiₓBi (wherein 0<x≤5) may be, for example, Li₃Bi, or LiBi.

LiₓTe (wherein 0<x≤5) may be, for example, Li₂Te, or Li₃Te.

LixGe (wherein 0<x≤5) may be, for example, Li₁₅Ge₄(Li_{3.75}Ge), or Li₉Ge₄(Li_{2.25}Ge).

LiₓAl (wherein 0<x≤4) may be, for example, Li₃Al.

LiₓSb (wherein 0<x≤4) may be, for example, Li₃Sb.

The lithium ion conductor may be LiCI, LiBr, Lil, LiF, Li₂O, Li₂O₂, Li₃N, LiN₃, LiNO₃, LiClO₄, Li₃P, Li₃P₇, LiP, LiP₇, Li₃PO₄, Li₂S, LiS₄, LiOH, Li₂CO₃ or a combination thereof. The lithium oxide may be Li₂O, Li₂O₂, or a combination thereof. A combination comprising at least one of the foregoing may be used.

A content of the first metal material in the composite may be in a range of about 0.1 parts by weight to about 95 parts by weight, about 1 parts by weight to about 95 parts by weight, about 5 parts by weight to about 90 parts by weight, about 10 parts by weight to about 85 parts by weight, or about 15 parts by weight to about 70 parts by weight, based on 100 parts by weight of the composite.

The composite according to an embodiment may have a structure in which the first metal material is dispersed in a matrix comprising the lithium ion conductor. The lithium ion conductor may serve as a matrix to suppress movement and shape change of the first metal material. It may be confirmed through a scanning electron microscopy (SEM) and a transmission electron microscopy (TEM) that the composite may be different from a simple mixture of the lithium ion conductor and the first metal material or a core-shell structure comprising the lithium ion conductor and the first metal material.

As compared with a composite including a core/shell structure comprising the lithium ion conductor and the first metal material, and the composite including a simple mixture of the lithium ion conductor and the first metal material, the composite may prevent the metal components, e.g., the first metal, from being dissolved into the lithium metal or reacting with lithium and failing due to volume expansion or aggregation during repeated charge and discharge.

The lithium ion conductor matrix may include, for example, lithium oxide (Li₂O), and the first metal material may be, for example, LiₓSn (wherein 0<x≤5).

The composite according to an embodiment may be a composite including, for example, LiₓSn (wherein 0<x≤5) and LiCI. In the composite, a content of LiₓSn (wherein 0<x≤5) may be greater than a content of LiCI.

The composite according to an embodiment may include LiₓSn (wherein 0<x≤5) and Li₂O.

The composite according to an embodiment may further include LiₓSn (wherein 0<x≤5), Li₂SnO₃, Li₈SnO₆, or a combination thereof, and Li₂O, Li₂O₂, or a combination thereof.

A size of the first metal material of the composite may be in a range of about 0.1 nanometer (nm) to about 300 nm, about 1 nm to about 200 nm, or about 100 nm to about 300 nm. When the size of the first metal material is within any of these ranges, an interfacial resistance between the solid electrolyte and the negative electrode may be reduced.

The "size" as used herein indicates a particle diameter when a particle to be measured is spherical or indicates a major axis length when a particle to be measured is non-spherical. The diameter may be, for example, an average diameter, and the major axis length may be, for example, an average major axis length. The average diameter and the average major axis length may respectively be an average value of measured diameters and measured major axis lengths.

A particle size may be determined using a scanning electron microscope (SEM) or a transmission electron microscope (TEM). The average diameter may be, for example, an average diameter measured by an SEM, and the average diameter may be an average value of diameters of about 10 particles to about 30 particles in the SEM image.

When an all-solid secondary battery is repeatedly charged and discharged, metal particles in the negative electrode may be severely aggregated, and thus, lifespan characteristics of the all-solid secondary battery may be deteriorated. However, in the all-solid secondary battery according to an embodiment as described above, the first metal material comprised in the interlayer in contact with the solid electrolyte may not agglomerate, even after charge and discharge, and may be present as discrete nanoparticles after charge and discharge. Accordingly, deterioration of lifespan characteristics may be effectively prevented.

A thickness of the interlayer may be 1 micrometer (µm) or less, 500 nm or less, in a range of about 5 nm to about 300 nm, about 10 nm to about 500 nm, or about 20 nm to about 500 nm. When a thickness of the interlayer is greater than these ranges, local deposition of lithium metal in the interlayer during a charge process may be increased. Accordingly, cracks may be generated in the solid electrolyte. Thus, when a thickness of the interlayer is within any of these ranges, an interfacial resistance between the first negative active material layer and the solid electrolyte may be effectively reduced while not causing cracks in the solid electrolyte. A thickness of the first negative active material layer may be in a range of about 1 µm to about 10 µm, or about 3 µm to about 8 µm.

In the present specification, when a thickness of each layer is not uniform, an average thickness of each layer may be defined by calculating an average value.

A volume of the first negative active material layer after charging the all-solid secondary battery may be 200 percent (%) or less than a volume of the first negative active material layer after discharging, for example, about 100 % to about 200 %, or about 125 % to about 175 % of a volume of the first negative active material layer after discharging. An all-solid secondary battery having the first negative active material layer having such a volume change may have excellent cycle characteristics.

Upon assembly of a battery, the interlayer may contain, for example, a lithium-free composite, such as Sn-Clₓ (wherein 0<x≤6) composite, and the lithium-free composite may be converted to a lithium-containing composite after compression and/or battery charging.

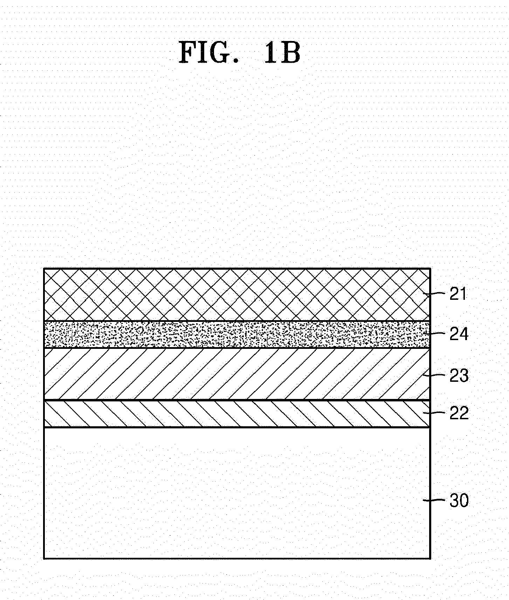

FIG. 1B is a schematic view of an embodiment of a structure of a negative electrode-solid electrolyte sub-assembly for an all-solid secondary battery.

As shown in FIG. 1B, a second negative active material layer 24 may be further interposed between the first negative active material layer 23 and the negative electrode current collector 21.

The second negative active material layer 24 may be added while assembling a battery. In some embodiments, the second negative active material layer 24 may be a precipitation layer formed by battery charging. In some embodiments, the negative electrode current collector, the interlayer, the first negative active material layer, the second negative active material layer, or a region therebetween, may be a lithium metal-free region that may not include lithium metal in an initial state or in a state after discharge of the all-solid secondary battery.

The second negative active material layer may be a product of charging of the all-solid secondary battery, or disposing (e.g., contacting, or bonding) of the negative electrode current collector to the first negative active material layer, or a combination thereof. The second negative active material layer may be a lithium metal layer or a lithium metal alloy layer. In an aspect, the second negative active material layer is formed by contacting a negative current collector coated with lithium metal with the first negative active material layer, then by a bonding process. For example, cold isotactic pressing (CIP) may be used to bond the layers together.

The second negative active material layer may include a third metal (M3). The third metal (M3) may be a metal that reacts with lithium to form an alloy or compound, or may be a metal that does not react with lithium.

The first negative active material layer 23 may contain a carbonaceous active material. The carbonaceous active material may act as a buffer layer to alleviate volume expansion that can occur upon lithium precipitation or intercalation during charge and discharge.

The third metal (M3) may comprise at least one metal of lithium, silver (Ag), tin (Sn), indium (In), silicon (Si), gallium (Ga), aluminum (Al), titanium (Ti), zirconium (Zr), niobium (Nb), germanium (Ge), antimony (Sb), bismuth (Bi), zinc (Zn), gold (Au), platinum (Pt), palladium (Pd), nickel (Ni), iron (Fe), cobalt (Co), chromium (Cr), magnesium (Mg), cesium (Cs), cerium (Ce), Molybdenum (Mo), lanthanum (La), tungsten (W), tellurium (Te), a lithium alloy comprising lithium and silver, tin, indium, silicon, gallium, aluminum, titanium, zirconium, niobium, germanium, antimony, bismuth, zinc, gold, platinum, palladium, nickel, iron, cobalt, chromium, magnesium, cesium, cerium, Molybdenum, lanthanum, tungsten, tellurium, or a combination thereof. A combination comprising at least one of the forgoing may be used. The third metal (M3) may be, for example, lithium metal, a lithium alloy, or a combination thereof.

In an embodiment, the second negative active material layer 24 may form a Li-third metal (i.e., Li-M3) alloy due to a reaction between lithium precipitated by a reversible reaction of an all-solid secondary battery during a charge process and the third metal (M3). As a result, the second negative active material layer 24 may contain a Li-M3 alloy.

In particular, the second negative active material layer 24 may be a single metal layer of Ag or Sn or a lithium metal single layer before charging (that is, before precipitation by charging) or from an initial state.

When the second negative active material layer includes a lithium alloy such as Ag-Li, when assembling a battery, a silver layer may be formed, and lithium may be precipitated in the silver layer to thereby form a lithium alloy layer such as an Ag-Li layer during charge of the all-solid secondary battery, disposing the current collector to the first negative active material, or a combination thereof.

A thickness of the second negative active material layer may be in a range of about 20 nm to about 50 µm, about 50 nm to about 40 µm, about 100 nm to about 30 µm, or about 300 nm to about 20 µm. When a thickness of the second negative active material layer is within any of these ranges, the all-solid secondary battery may have excellent cycle characteristics.

When the second negative active material layer is formed as a single layer of the third metal (M3), such as a silver layer when assembling a battery, a thickness of the second negative active material layer may be in a range of, for example, about 20 nm to about 1 µm, about 100 nm to about 1 µm, or about 300 nm to about 600 nm. The first negative active material layer may reduce volume expansion during charge and discharge and may improve uniformity of lithium distribution.

In the first negative active material layer, the carbonaceous negative active material may include amorphous carbon. The amorphous carbon may be, for example, carbon black (CB), acetylene black (AB), furnace black (FB), KETJEN black (KB), graphene, carbon nanotubes or carbon nanofibers, but embodiments are not limited thereto. Any suitable amorphous carbon available in the art may be used.

The first negative active material layer may further include a first negative active material comprising a second metal or a metalloid. The first negative active material comprising a second metal or metalloid may include indium (In), silicon (Si), gallium (Ga), tin (Sn), aluminum (Al), titanium (Ti), zirconium (Zr), niobium (Nb), germanium (Ge), antimony (Sb), bismuth (Bi), gold (Au), platinum (Pt), palladium (Pd), magnesium (Mg), silver (Ag), zinc (Zn), nickel, iron, cobalt, chromium , cesium, cerium, molybdenum, sodium, potassium, calcium, yttrium, tantalum, hafnium, barium, vanadium, strontium, tellurium, lanthanum or a combination thereof, but embodiments are not limited thereto. Any suitable first negative active material comprising a second metal or metalloid that may form an alloy or compound with lithium available in the art may be used.

The first negative active material layer may include a negative active material comprising a carbonaceous active material, and optionally a first negative active material comprising a second metal or a metalloid, a combination thereof, or may include a mixture of a plurality of different negative active materials. For example, the first negative active material layer may include amorphous carbon only or further include a metal or a metalloid of indium (In), silicon (Si), gallium (Ga), tin (Sn), aluminum (Al), titanium (Ti), zirconium (Zr), niobium (Nb), germanium (Ge), antimony (Sb), bismuth (Bi), gold (Au), platinum (Pt), magnesium (Mg), palladium (Pd), silver (Ag), zinc (Zn), or a combination thereof. In some embodiments, the first negative active material layer 23 may include a complex of an amorphous carbon and a first negative active material comprising the second metal or a metalloid of indium (In), silicon (Si), gallium (Ga), tin (Sn), aluminum (Al), titanium (Ti), zirconium (Zr), niobium (Nb), germanium (Ge), antimony (Sb), bismuth (Bi), gold (Au), platinum (Pt), palladium (Pd), magnesium (Mg), silver (Ag), zinc (Zn), or a combination thereof. The weight ratio of contents of composites such as amorphous carbon and silver may be, for example, in a range of about 10:1 to about 1:2, about 5:1 to about 1:1, or about 4:1 to about 2:1, but embodiments are not limited thereto. The weight ratio of contents of the composite may be selected according to desired characteristics of the all-solid secondary battery. As the first negative active material layer 23 may have such a composition, cycle characteristics of the all-solid secondary battery may be further improved.

The negative active material included in the first negative active material layer may include, for example, a mixture of a first particle comprising amorphous carbon and a second particle comprising metal or metalloid. A mixture may be a simple mixture of the first particle and the second particle or a mixture of the first particle and the second particle physically bound by a binder. The metal or metalloid may include, for example, indium (In), silicon (Si), gallium (Ga), tin (Sn), aluminum (Al), titanium (Ti), zirconium (Zr), niobium (Nb), germanium (Ge), antimony (Sb), bismuth (Bi), gold (Au), platinum (Pt), magnesium (Mg), palladium (Pd), silver (Ag), zinc (Zn), or a combination thereof. In some embodiments, the metalloid may be a semiconductor. A content of the second particle may be in a range of about 8 weight percent (wt%) to about 60 wt%, about 10 wt% to about 50 wt%, about 15 wt% to about 40 wt%, or about 20 wt% to about 30 wt%, based on a total weight of the mixture. When the second particle has a content within any of these ranges, for example, cycle characteristics of the all-solid secondary battery 1 may be further improved.

A thickness of the first negative active material layer may be in a range of, for example, about 10 nm to about 10 µm, about 100 nm to about 10 µm, about 200 nm to about 10 µm, about 300 nm to about 10 µm, about 400 nm to about 10 µm, about 500 nm to about 10 µm, about 1 µm to about 10 µm, about 1 µm to about 9 µm, about 1 µm to about 8 µm, about 2 µm to about 7 µm, or about 3 µm to about 7 µm. When the second negative active material layer has a thickness within any of these ranges, short circuit may be suppressed, and cycle characteristics of the all-solid secondary battery may be improved.

When the first negative active material layer includes a carbonaceous active material, the first negative active material layer may have a changing volume according to a volumetric change of the second negative active material layer. For example, when the second negative active material layer expands during a charge process, volume expansion of the second negative active material layer may be absorbed and alleviated by the first negative active material layer.

As the first negative active material layer includes a carbonaceous active material, a void may be also included therein. The first negative active material layer in a state after discharge may include a void created inside.

As described above, when the first negative active material layer includes a carbonaceous active material, the first negative active material layer may have a characteristic to relieve volume expansion thereof, while interfacial adhesion with the solid electrolyte may be poor. Accordingly, when the first negative active material layer is placed in direct contact with the solid electrolyte 30, there is a problem that an interfacial resistance between the first negative active material layer 23 and the solid electrolyte 30 increases. In this light, the negative electrode of the all-solid secondary battery according to an embodiment may form the interlayer 22 between the solid electrolyte 30 and the first negative active material layer 23.

The interfacial resistance between the interlayer 22 and the solid electrolyte 30 may be less than or equal to a predetermined level. For example, the interfacial resistance between the interlayer 22 and the solid electrolyte 30 may be less than about 500 ohms square centimeter (ohm·cm²). For example, the interfacial resistance between the interlayer 22 and the solid electrolyte 30 may be less than about 200 ohm·cm², e.g., about 1 ohm·cm² to about 500 ohm·cm², about 10 ohm·cm² to about 400 ohm·cm², or about 100 ohm·cm² to about 200 ohm·cm².

The interfacial resistance of the interlayer 22 with the solid electrolyte 30 may be less than the interfacial resistance between the first negative active material layer 23 and the solid electrolyte 30. For example, the interfacial resistance of the interlayer 22 with the solid electrolyte 30 may be 1/10 of the interfacial resistance between the first negative active material layer 23 and the solid electrolyte 30. For example, when the first negative active material layer 23 is in direct contact with the solid electrolyte 30, and the interfacial resistance between the first negative active material layer 23 and the solid electrolyte 30 is greater than 2,000 ohm·cm², the interfacial resistance between the interlayer 22 and the solid electrolyte 30, which may be in direct contact with each other, may be less than 200 ohm·cm².

The interlayer may contain metal to induce rapid diffusion of lithium ions introduced through the solid electrolyte 30 during a charge process. Accordingly, even when a surface of the solid electrolyte 30 is irregular, and lithium ions are locally concentrated and introduced, the lithium ions may be evenly distributed throughout the negative electrode 20 by using rapid diffusion of the lithium ions through the interlayer 22.

The first negative active material layer may include i) a composite of a first particle comprising an amorphous carbon and a second particle comprising a metal or metalloid, or ii) a mixture of a first particle comprising an amorphous carbon and a second particle comprising a metal or metalloid, wherein a content of the second particle may be in a range of about 1 wt% to about 60 wt%, about 2 wt% to about 50 wt%, or about 5 wt% to about 40 wt%, based on a total weight of the composite or the mixture.

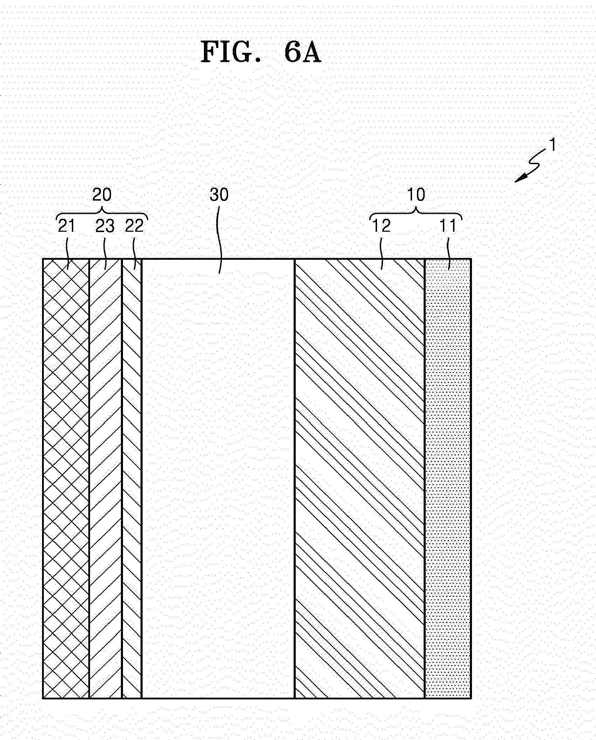

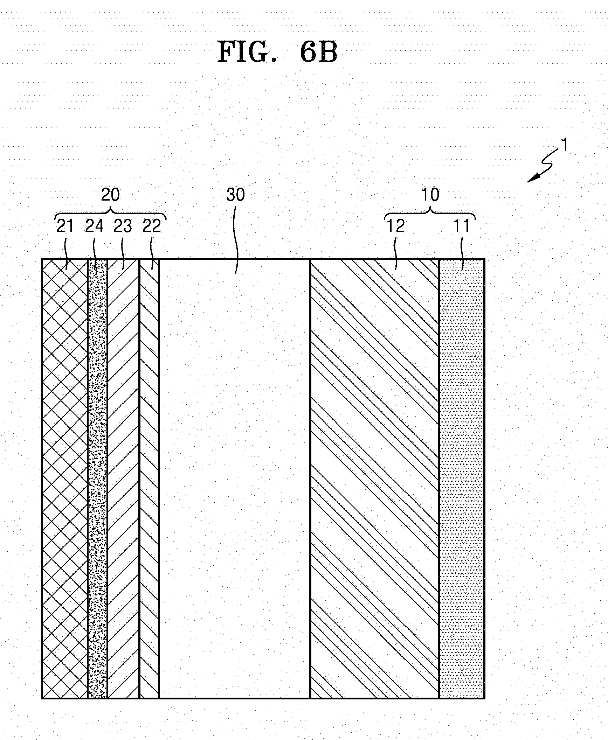

FIGS. 6A and 6B are each a schematic view illustrating the all-solid secondary battery 1 according to one or more embodiments.

As shown in FIGS. 6A and 6B, the all-solid secondary battery 1 may be a secondary battery including a solid electrolyte as an electrolyte.

The all-solid secondary battery 1 may include a positive electrode 10, a solid electrolyte 30, and a negative electrode 20.

### Positive electrode

The positive electrode 10 may include a positive electrode current collector 11 and a positive active material layer 12.

Examples of the positive electrode current collector 11 include a plate or a foil including indium (In), copper (Cu), magnesium (Mg), stainless steel, titanium (Ti), iron (Fe) cobalt (Co), nickel (Ni), zinc (Zn), aluminum (Al), germanium (Ge), lithium (Li), or an alloy thereof.

The positive active material layer 12 may include, for example, a positive active material.

The positive active material may be any suitable positive active material capable of reversible intercalation and deintercalation of lithium ions. For example, the positive active material may be lithium transition metal oxide, such as lithium cobalt oxide (LCO), lithium nickel oxide, lithium nickel cobalt oxide, lithium nickel cobalt aluminum oxide (NCA), lithium nickel cobalt manganese oxide (NCM), lithium manganate, or lithium iron phosphate, nickel sulfide, copper sulfide, lithium sulfide, iron oxide, or vanadium oxide. But embodiments are not limited thereto. Any suitable positive active material available in the art may be used. The positive active material may be used alone or in combination of at least two thereof.

The positive active material may be, for example, represented by one of: LiₐA_{1-b}B'_{b}D₂ (wherein 0.9≤a≤1 and 0≤b≤0.5); LiaE_{1-b}B'_{b}O_{2-c}D_{c} (wherein 0.9≤a≤1, 0≤b≤0.5, and 0≤c≤0.05); LiE_{2-b}B'_{b}O_{4-c}D_{c} (wherein 0≤b≤0.5 and 0≤c≤0.05); LiₐNi_{1-b-c}Co_{b}B'_{c}D_{α} (wherein 0.9≤a≤1, 0≤b≤0.5, 0≤c≤0.05, and 0<α≤2); LiₐNi_{1-b-c}Co_{b}B'_{c}O_{2-α}F'_{α} (wherein 0.9≤a≤1, 0≤b≤0.5, 0≤c≤0.05, and 0<α<2); LiₐNi_{1-b-c}Co_{b}B'_{c}O_{2-α}F'₂ (wherein 0.9≤a≤1, 0≤b≤0.5, 0≤c≤0.05, and 0<α<2); LiaNi_{1-b-c}Mn_{b}B'_{c}D_{α} (wherein 0.9≤a≤1, 0≤b≤0.5, 0≤c≤0.05, and 0<α≤2); LiₐNi_{1-b-c}Mn_{b}B'_{c}O_{2-α}F'_{α} (wherein 0.9≤a≤1, 0≤b≤0.5, 0≤c≤0.05, and 0<α<2); LiaNi_{1-b-}cMn_{b}B'_{c}O_{2-α}F'₂ (wherein 0.9≤a≤1, 0≤b≤0.5, 0≤c≤0.05, and 0<α<2); LiaNi_{b}EcG_{d}O₂ (wherein 0.9≤a≤1, 0≤b≤0.9, 0≤c≤0.5, and 0.001≤d≤0.1); LiaNi_{b}CocMn_{d}GeO₂ (wherein 0.9≤a≤1, 0≤b≤0.9, 0≤c≤0.5, 0≤d≤0.5, and 0.001≤e≤0.1); LiaNiG_{b}O₂ (wherein 0.9≤a≤1 and 0.001≤b≤0.1); LiₐCoG_{b}O₂ (wherein 0.9≤a≤1 and 0.001≤b≤0.1); and LiaMnG_{b}O₂ (wherein 0.9≤a≤1 and 0.001≤b≤0.1); LiaMn₂G_{b}O₄ (wherein 0.9≤a≤1 and 0.001≤b≤0.1); QO₂; QS₂; LiQS₂; V₂O₅; LiV₂O₅; LiI'O₂; LiNiVO₄; Li_{(3-f)}J₂(PO₄)₃ (wherein 0≤f≤2); Li_{(3-f)}Fe₂(PO₄)₃ (wherein 0≤f≤2); and LiFePO₄. In these compounds, A may be nickel (Ni), cobalt (Co), manganese (Mn), or a combination thereof; B' may be aluminum (Al), Ni, Co, Mn, chromium (Cr), iron (Fe), magnesium (Mg), strontium (Sr), vanadium (V), a rare-earth element, or a combination thereof; D may be oxygen (O), fluorine (F), sulfur (S), phosphorus (P), or a combination thereof; E may be Co, Mn, or a combination thereof; F' may be F, S, P, or a combination thereof; G may be Al, Cr, Mn, Fe, Mg, lanthanum (La), cerium (Ce), Sr, V, or a combination thereof; Q may be titanium (Ti), molybdenum (Mo), Mn, or a combination thereof; I' may be Cr, V, Fe, scandium (Sc), yttrium (Y), or a combination thereof; and J may be V, Cr, Mn, Co, Ni, copper (Cu), or a combination thereof.

A compound added with a coating layer formed on one of these compounds may also be used, and a mixture of these compounds and a compound added with a coating layer may also be used. In one or more embodiments, the coating layer added on a surface of these compounds may include a compound of a coating element from the group of oxide, hydroxide, oxyhydroxide, oxycarbonate, hydroxycarbonate, or a combination thereof, of the coating element. In one or more embodiments, these compounds constituting the coating layer may be amorphous or crystalline. In one or more embodiments, the coating element included in the coating layer may be magnesium (Mg), aluminum (Al), cobalt (Co), potassium (K), sodium (Na), calcium (Ca), silicon (Si), titanium (Ti), vanadium (V), tin (Sn), germanium (Ge), gallium (Ga), boron (B), arsenic (As), zirconium (Zr), or a mixture thereof. A method of forming a coating layer may be selected within a range of not affecting physical properties of the positive active material. The coating method may be, for example, a spray coating method or a dipping method. The detailed description of the coating method is omitted herein. Details of the method can be determined by one of ordinary skill in the art without undue experimentation.

The positive active material may include, for example, a lithium transition metal oxide having a layered rock salt type structure. The term "layered rock salt type structure" as used herein refers to a structure in which an oxygen atom layer and a metal atom layer are alternately and regularly arranged in <111> direction of a cubic rock salt type structure and the respective atom layer thus form a two-dimensional plane. The term "cubic rock salt type structure" as used herein refers to a NaCl type structure as one of crystal structures in which face-centered cubic lattices respectively formed of anions and cations are shifted by only a half of the ridge of each unit lattice. Examples of the lithium transition metal oxide having a layered rock salt type structure may be a ternary lithium transition metal oxide represented by LiNiₓCo_{y}Al_{z}O₂ (NCA) or LiNiₓCo_{y}Mn_{z}O₂ (NCM) (wherein 0<x<1, 0<y<1, 0<z<1, x+y+z=1). When the positive active material includes the ternary lithium transition metal oxide having a layered rock salt type structure, the all-solid secondary battery 1 may have further improved energy density and thermal stability.

The positive active material may be covered by a covering layer as described above. The covering layer may be any suitable covering layer known as a covering layer of a positive active material in the all-solid secondary battery 1. The covering layer may be, for example, Li₂O-ZrO₂.

For example, when the positive active material includes nickel (Ni) as a ternary lithium transition metal oxide such as NCA or NCM, the capacity density of the all-solid secondary battery 1 may be increased, thereby allowing a decrease in metal elution of a positive active material while charging. Consequently, the all-solid secondary battery 1 may have improved cycle characteristics.

The positive active material may be, for example, in a particle shape, such as a spherical shape or an oval-spherical shape. A particle diameter of the positive active material is not particularly limited. The diameter may be within a range applicable to a positive active material of the all-solid secondary battery 1 in the related art. A content of the positive active material of the positive electrode 10 is not particularly limited. The content may be within a range applicable to the positive electrode 10 of the all-solid secondary battery 1 in the related art.

The positive electrode 10 may further include an additive, for example, a conductive agent, a binder, a filler, a dispersing agent, and an ion conductive agent, in addition to the positive active material. Examples of the conductive agent include graphite, carbon black, acetylene black, KETJEN black, carbon fibers, metal powder, or a combination thereof. Examples of the binder may include, for example, styrene butadiene rubber (SBR), polytetrafluoroethylene, polyvinylidene fluoride, polyethylene, or a combination thereof. Moreover, a filler, a dispersing agent, or an ion conductive agent that may be included in the positive electrode 10 may be any suitable material for an electrode in a solid secondary battery.

The positive electrode 10 may further include a solid electrolyte. The solid electrolyte included in the positive electrode 10 may be similar with or different from the solid electrolyte included in the solid electrolyte 30. The solid electrolyte 30 will be described in detail.

The solid electrolyte included in the positive electrode 10 may be, for example, a sulfide (i.e., sulfide-based) solid electrolyte or an oxide solid electrolyte. The sulfide-based solid electrolyte and the oxide solid electrolyte may be the solid electrolyte used in the solid electrolyte layer 30.

In some embodiments, the positive electrode 10 may be, for example, impregnated in a liquid electrolyte. The liquid electrolyte may include a lithium salt and an ionic liquid, a polymeric ionic liquid, or a combination thereof. The liquid electrolyte may be non-volatile. The term "ionic liquid" refers to a salt in a liquid state at room temperature or a room temperature molten salt having a melting point of room temperature or less and consisting of ions. The ionic liquid may include a compound including a) at least one cation of an ammonium-based cation, a pyrrolidinium-based cation, a pyridinium-based cation, a pyrimidinium-based cation, an imidazolium-based cation, a piperidinium-based cation, a pyrazolium-based cation, an oxazolium-based cation, a pyridazinium-based cation, a phosphonium-based cation, a sulfonium-based cation, a triazolium-based cation, or a mixture thereof; and b) at least one anion of BF4-, PF₆⁻, AsF₆⁻, SbF₆⁻, AlCl₄⁻, HSO₄⁻, ClO₄⁻, CH₃SO₃⁻, CF₃CO₂⁻, Cl⁻, Br⁻, I⁻, SO₄⁻, CF3SO3-, (FSO₂)₂N⁻, (C₂F₅SO₂)2N⁻, (C₂F₅SO₂)(CF₃SO₂)N⁻, (CF₃SO₂)₂N⁻ or a combination thereof. For example, the ionic liquid may be at least one of N-methyl-N-propyl pyrrolidinium bis(trifluoromethane sulfonyl)imide, N-butyl-N-methyl pyrrolidinium bis(trifluoromethylsulfonyl)imide, 1-butyl-3-methylimidazolium bis(trifluoromethylsulfonyl)amide, 1-ethyl-3-methylimidazolium bis(trifluoromethylsulfonyl)amide, or a combination thereof. The polymeric ionic liquid may include a repeating unit including: i) at least one cation of an ammonium-based cation, a pyrrolidinium-based cation, a pyridinium-based cation, a pyrimidinium-based cation, an imidazolium-based cation, a piperidinium-based cation, a pyrazolium-based cation, an oxazolium-based cation, a pyridazinium-based cation, a phosphonium-based cation, a sulfonium-based cation, a triazolium-based cation, or a mixture thereof; and ii) at least one anion of BF₄⁻, PF₆⁻, AsF₆⁻, SbF₆⁻, AlCl₄⁻, HSO₄⁻, ClO₄⁻, CH₃SO₃⁻, CF₃CO₂⁻, (CF₃SO₂)₂N⁻, (FSO₂)₂N⁻, Cl⁻, Br⁻, I⁻, SO₄⁻, CF₃SO₃⁻, (C₂F₅SO₂)₂N⁻, (C₂F₅SO₂)(CF₃SO₂)N⁻, NO₃⁻, Al₂Cl₇⁻, (CF₃SO₂)₃C⁻, (CF₃)₂PF₄⁻, (CF₃)₃PF₃⁻, (CF₃)₄PF₂⁻, (CF₃)₅PF⁻, (CF₃)₆P⁻, SF₅CF₂SO₃⁻, SF₅CHFCF₂SO₃⁻, CF₃CF₂(CF₃)₂CO⁻, CF₃SO₂)₂CH⁻, (SF₅)₃C⁻, (O(CF₃)₂C₂(CF₃)₂O)₂PO⁻, or a combination thereof. The lithium salt may be any suitable lithium salt available in the art. For example, the lithium salt may be LiPF₆, LiBF₄, LiSbF₆, LiAsF₆, LiClO₄, LiCF₃SO₃, Li(CF₃SO₂)₂N, Li(FSO₂)₂N, LiC₄F₉SO₃, LiAlO₂, LiAlCl₄, LiN(CₓF₂ₓ₊₁SO₂)(C_{y}F_{2y+1}SO₂) (wherein x and y may each be a natural number), LiCI, Lil, or a mixture thereof. The liquid electrolyte may include the lithium salt at a concentration in a range of about 0.1 molar (M) to about 5 M. A content of the liquid electrolyte impregnated in the positive electrode 10 may be in a range of about 0 part to about 100 parts by weight, about 0 part to about 50 parts by weight, about 0 part to about 30 parts by weight, about 0 part to about 20 parts by weight, about 0 part to about 10 parts by weight, or about 0 part to about 5 parts by weight, based on 100 parts by weight of the positive active material layer 12 not including a liquid electrolyte.

### Solid electrolyte

The solid electrolyte 30 may be between the positive electrode 10 and the negative electrode 20.

The solid electrolyte may be an oxide (i.e., oxide-based) solid electrolyte, a sulfide-based solid electrolyte, or a combination thereof. The solid electrolyte may be, for example, an oxide-based solid electrolyte. The oxide-based solid electrolyte may be Li_{1+x+y}AlₓTi₂₋ₓSi_{y}P_{3-y}O₁₂ (wherein 0<x<2 and 0≤y<3), Li₃PO₄, LiₓTi_{y}(PO₄)₃ (wherein 0<x≤2 and 0<y≤3), LiₓAl_{y}Ti_{z}(PO₄)₃ (wherein 0<x≤2, 0<y≤1, and 0<z≤3), Li_{1+x+y}(Al_{1-z}Ga_{z})ₓ(Ti₁₋ₚGeₚ)₂₋ₓSi_{y}P_{3-y}O₁₂ (wherein 0≤x≤1, 0≤y≤1, 0≤z≤1, and 0≤p≤1), LiₓLa_{y}TiO₃ (wherein 0<x≤2 and 0<y≤3), Li₂O, LiOH, Li₂CO₃, and LiAlO₂, Li₂O-Al₂O₃-SiO₂-P₂O₅-TiO₂-GeO₂, and Li₃₊ₓLa₃M₂O₁₂ (wherein M = Te, Nb, Zr, or a combination thereof, and x may be an integer from 1 to 10), or a combination thereof. The solid electrolyte may be prepared by sintering.

The oxide-based solid electrolyte may be, for example, a garnet-type solid electrolyte.

A non-limiting example of the garnet-type solid electrolyte may be an oxide represented by Formula 1:

Formula 1 (LiₓM1_{y})(M2)_{3-δ}(M3)_{2-ω}O_{12-z}X_{z}

wherein, in Formula 1,
3≤x≤8, 0≤y<2, -0.2≤δ≤0.2, -0.2≤ω≤0.2, and 0≤z≤2,
M1 may be a monovalent cation, a divalent cation, a trivalent cation, or a combination thereof,
M2 may be a monovalent cation, a divalent cation, a trivalent cation, or a combination thereof,
M3 may be a monovalent cation, a divalent cation, a trivalent cation, a tetravalent cation, a pentavalent cation, a hexavalent cation, or a combination thereof, and
X may be a monovalent anion, a divalent anion, a trivalent anion, or a combination thereof.

In Formula 1, examples of the monovalent cation may include Na, K, Rb, Cs, H, Fr, or a combination thereof, and examples of the divalent cation may include Mg, Ca, Ba, Sr, or a combination thereof. Examples of the trivalent cation may include In, Sc, Cr, Au, B, Al, Ga, or a combination thereof, and examples of the tetravalent cation may include Sn, Ti, Mn, Ir, Ru, Pd, Mo, Hf, Ge, V, Si, or a combination thereof. Examples of the pentavalent cation may include Nb, Ta, Sb, V, P, or a combination thereof.

M1 may be, for example, hydrogen (H), iron (Fe), gallium (Ga), aluminum (Al), boron (B), beryllium (Be), or a combination thereof. M2 may be lanthanum (La), barium (Ba), calcium (Ca), strontium (Sr), yttrium (Y), bismuth (Bi), praseodymium (Pr), neodymium (Nd), actinium (Ac), samarium (Sm), gadolinium (Gd), or a combination thereof, and M3 may be zirconium (Zr), hafnium (Hf), tin (Sn), niobium (Nb), titanium (Ti), vanadium (V), chromium (Cr), manganese (Mn), cobalt (Co), nickel (Ni), copper (Cu), molybdenum (Mo), tungsten (W), tantalum (Ta), magnesium (Mg), technetium (Tc), ruthenium (Ru), palladium (Pd), iridium (Ir), scandium (Sc), cadmium (Cd), indium (In), antimony (Sb), tellurium (Te), thallium (TI), platinum (Pt), silicon (Si), aluminum (Al), or a combination thereof.

In Formula 1, the monovalent anion represented by X may be halogen, pseudohalogen, or a combination thereof, and the divalent anion represented by X may be S²⁻ or Se²⁻, and the trivalent anion represented by X may be, for example, N³⁻.

In Formula 1, 3≤x≤8, 4≤x≤8, 5≤x≤8, 6≤x≤8, 6.6≤x≤8, 6.7≤x≤7.5, or 6.8≤x≤7.1.

A non-limiting example of the garnet-type solid electrolyte may be an oxide represented by Formula 2:

Formula 2 (LiₓM1_{y})(Laₐ₁M2ₐ₂)_{3-δ}(Zr_{b1}M3_{b2})_{2-ω}O_{12-z}X_{z}

wherein, in Formula 2,
M1 may be hydrogen (H), iron (Fe), gallium (Ga), aluminum (Al), boron (B), beryllium (Be), or a combination thereof,
M2 may be barium (Ba), calcium (Ca), strontium (Sr), yttrium (Y), bismuth (Bi), praseodymium (Pr), neodymium (Nd), actinium (Ac), samarium (Sm), gadolinium (Gd), or a combination thereof,
M3 may be hafnium (Hf), tin (Sn), niobium (Nb), titanium (Ti), vanadium (V), chromium (Cr), manganese (Mn), cobalt (Co), nickel (Ni), copper (Cu), molybdenum (Mo), tungsten (W), tantalum (Ta), magnesium (Mg), technetium (Tc), ruthenium (Ru), palladium (Pd), iridium (Ir), scandium (Sc), cadmium (Cd), indium (In), antimony (Sb), tellurium (Te), thallium (TI), platinum (Pt), silicon (Si), aluminum (Al), or a combination thereof, wherein 3≤x≤8, 0≤y≤2, -0.2≤5≤0.2, -0.2≤ω≤0.2, and 0≤z≤2,
a1+a2=1, 0<a1≤1, and 0≤a2<1,
b1+b2=1, 0<b1<1, and 0≤b2<1, and
X may be a monovalent anion, a divalent anion, a trivalent anion, or a combination thereof.

In Formula 2, the monovalent anion represented by X may be halogen, pseudohalogen, or a combination thereof, and the divalent anion represented by X may be S²⁻ or Se²⁻, and the trivalent anion represented by X may be, for example, N³⁻.

In Formula 2, 3≤x≤8, 4≤x≤8, 5≤x≤8, 6≤x≤8, 6.6≤x≤8, 6.7≤x≤7.5, or 6.8≤x≤7.1.

The term "pseudohalogen" as used herein refers to a molecule comprising at least two electronegative atoms resembling halogens in a free state and generating anions similar to halide ions. Examples of pseudohalogens include cyanide, cyanate, thiocyanate, azide, or a combination thereof.

Examples of halogens include iodine (I), chlorine (CI), bromine (Br), fluorine (F), or a combination thereof.

The trivalent anion may be, for example, N³⁻.

In some embodiments, the garnet-type solid electrolyte may be an oxide represented by Formula 3:

Formula 3 Li₃₊ₓLa₃Zr₂₋ₐMaO₁₂

wherein, in Formula 3,
M may be Al, Ga, In, Si, Ge, Sn, Sb, Bi, Sc, Y, Ti, Hf, V, Nb, Ta, W, or a combination thereof, wherein x may be an integer from 1 to 10, and 0≤a<2.

The garnet-type solid electrolyte may be, for example, Li₇La₃Zr₂O₁₂ or Li_{6.5}La₃Zr_{1.5}Ta_{0.5}O₁₂.

In some embodiments, the solid electrolyte may be, for example, a sulfide-based solid electrolyte. The sulfide-based solid electrolyte may be, for example, Li₂S-P₂S₅, Li₂S-P₂S₅-LiX (wherein X may be a halogen element), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (wherein m and n may each be a positive number, and Z may be Ge, Zn, or Ga), Li₂S-GeS₂, Li₂S-SiS₂-Li₃PO₄, Li₂S-SiS₂-LiₚMO_{q} (wherein p and q may each be a positive number, and M may be P, Si, Ge, B, Al, Ga, In, or a combination thereof), Li₇₋ₓPS₆₋ₓClₓ (wherein 0≤x≤2), Li₇₋ₓPS₆₋ₓBrₓ (wherein 0≤x≤2), Li₇₋ₓPS₆₋ₓIₓ (wherein 0≤x≤2), or a combination thereof. The sulfide-based solid electrolyte may be prepared by performing a melt quenching method or a mechanical milling method on a start material, e.g., Li₂S or P₂S₅. Subsequently, heat treatment may be performed thereon. The sulfide-based solid electrolyte may be an amorphous sulfide solid electrolyte, a crystalline sulfide solid electrolyte, or a mixture thereof.

In addition, the solid electrolyte may include, for example, at least sulfur (S), phosphorus (P), and lithium (Li), as constituting elements, of the sulfide-based solid electrolyte materials described above. For example, the sulfide-based solid electrolyte may be a material including Li₂S-P₂S₅. When a material including Li₂S-P₂S₅ is used as the sulfide-based solid electrolyte material, a molar ratio of Li₂S to P₂S₅ may be, for example, Li₂S:P₂S₅=50:50 to 90:10.

In some embodiments, the sulfide-based solid electrolyte included in a solid electrolyte may be an argyrodite-type compound including Li₇₋ₓPS₆₋ₓClₓ, wherein 0≤x≤2, Li₇₋ₓPS₆₋ₓBrₓ, wherein 0≤x≤2, and Li₇₋ₓPS₆₋ₓIₓ, wherein 0≤x≤2. In particular, the sulfide-based solid electrolyte included in a solid electrolyte may be an argyrodite-type compound including Li₆PS₅Cl, Li₆PS₅Br, Li₆PS₅I, or a combination thereof.

The solid electrolyte 30 may further include, for example, a binder. The binder included in the solid electrolyte 30 may be, for example, styrene butadiene rubber (SBR), polytetrafluoroethylene, polyvinylidene fluoride, or polyethylene. But embodiments are not limited thereto. Any suitable binder available in the art may be used. The binder of the solid electrolyte 30 may be identical to or different from the binder of the positive active material layer 12 and the binder of the negative active material layer 23.

### Negative electrode

As shown in FIGS. 6A and 6B, the negative electrode 20 may include the negative electrode current collector 21, the first negative active material layer 23, and the interlayer 22.

For example, the negative electrode current collector 21 may include materials that are not reactive to lithium and do not form an alloy or a compound with lithium. Materials of the negative electrode current collector 21 may include, for example, copper (Cu), stainless steel, titanium (Ti), iron (Fe), cobalt (Co), nickel (Ni), or a combination thereof. But embodiments are not limited thereto. Any suitable electrode current collector available in the art may be used. The negative electrode current collector 21 may include one type of the metal described above, or an alloy of at least two metals or a coating material. The negative electrode current collector 21 may be, for example, in a plate shape or a foil shape.

As shown in FIG. 6B, in the all-solid secondary battery 1 according to one or more embodiments, the second negative active material layer 24 may be between the negative electrode current collector 21 and the first negative active material layer 23.

During a charge and discharge process, a volume change rate of the first negative active material layer 23 may be greater than a volume change rate of the interlayer 22.

The first negative active material layer 23 may include a carbonaceous active material, and optionally a first negative active material comprising a metal or metalloid.

Examples of the carbonaceous active material may include amorphous carbon. Amorphous carbon may be, for example, carbon black (CB), acetylene black (AB), furnace black (FB), Ketjen black (KB), graphene, carbon nanotubes or carbon nanofibers, but embodiments are not limited thereto. Any suitable amorphous carbon available in the art may be used.

The first negative active material comprising the second metal or metalloid may include indium (In), silicon (Si), gallium (Ga), tin (Sn), aluminum (Al), titanium (Ti), zirconium (Zr), niobium (Nb), germanium (Ge), antimony (Sb), bismuth (Bi), gold (Au), platinum (Pt), palladium (Pd), magnesium (Mg), silver (Ag), zinc (Zn), or a combination thereof, but embodiments are not limited thereto. Any suitable negative active material comprising metal or metalloid that may form an alloy or compound with lithium available in the art may be used.

The first negative active material layer 23 may include a negative active material of a carbonaceous active material, and optionally a first negative active material comprising metal or a metalloid, or may include a mixture of a plurality of different negative active materials. For example, the first negative active material layer 23 may include amorphous carbon only or further include a metal or a metalloid of indium (In), silicon (Si), gallium (Ga), tin (Sn), aluminum (Al), titanium (Ti), zirconium (Zr), niobium (Nb), germanium (Ge), antimony (Sb), bismuth (Bi), gold (Au), platinum (Pt), palladium (Pd), magnesium (Mg), silver (Ag), zinc (Zn), or a combination thereof. In some embodiments, the first negative active material layer 23 may include a complex of amorphous carbon and a negative active material comprising metal or metalloid of indium (In), silicon (Si), gallium (Ga), tin (Sn), aluminum (Al), titanium (Ti), zirconium (Zr), niobium (Nb), germanium (Ge), antimony (Sb), bismuth (Bi), gold (Au), platinum (Pt), magnesium (Mg), palladium (Pd), silver (Ag), zinc (Zn), or a combination thereof. The weight ratio of components such as amorphous carbon and silver may be, for example, in a range of about 10:1 to about 1:2, about 5:1 to about 1:1, or about 4:1 to about 2:1, but embodiments are not limited thereto. The composite weight ratio may be selected according to desired characteristics of the all-solid secondary battery 1.

The negative active material included in the first negative active material layer 23 may include, for example, a mixture of a first particle comprising amorphous carbon and a second particle comprising metal or metalloid. A mixture is a simple mixture of the first particle and the second particle or a mixture of the first particle and the second particle physically bound by a binder. The metal or metalloid may include, for example, indium (In), silicon (Si), gallium (Ga), tin (Sn), aluminum (Al), titanium (Ti), zirconium (Zr), niobium (Nb), germanium (Ge), antimony (Sb), bismuth (Bi), gold (Au), platinum (Pt), palladium (Pd), magnesium (Mg), silver (Ag), zinc (Zn), or a combination thereof. In some embodiments, the metalloid may be a semiconductor. A content of the second particle may be in a range of about 8 wt% to about 60 wt%, about 10 wt% to about 50 wt%, about 15 wt% to about 40 wt%, or about 20 wt% to about 30 wt%, based on a total weight of the mixture. When the second particle has a content within any of these ranges, for example, cycle characteristics of the all-solid secondary battery 1 may be further improved.

The first negative active material layer 23 may include, for example, amorphous carbon and a silicon-based negative active material. The silicon-based negative active material may include silicon, silicon-carbon composite, SiOₓ (wherein 0<x<2), Si-Q alloy (wherein Q may be an alkali metal, an alkaline earth metal, a Group 13 element, a Group 14 element, a Group 15 element, a Group 16 element, a transition metal, a rare earth element, or a combination thereof, and Q is not Si), or a combination thereof, or the silicon-based negative active material may be a mixture of at least one thereof and SiO₂. Q may be magnesium (Mg), calcium (Ca), strontium (Sr), barium (Ba), radium (Ra), scandium (Sc), yttrium (Y), titanium (Ti), zirconium (Zr), hafnium (Hf), rutherfordium (Rf), vanadium (V), niobium (Nb), tantalum (Ta), dubnium (Db), chromium (Cr), molybdenum (Mo), tungsten (W), seaborgium (Sg), technetium (Tc), rhenium (Re), bohrium (Bh), iron (Fe), lead (Pb), ruthenium (Ru), osmium (Os), hassium (Hs), rhodium (Rh), iridium (Ir), palladium (Pd), platinum (Pt), copper (Cu), silver (Ag), gold (Au), zinc (Zn), cadmium (Cd), boron (B), aluminum (Al), gallium (Ga), tin (Sn), indium (In), thallium (TI), germanium (Ge), phosphorus (P), arsenic (As), antimony (Sb), bismuth (Bi), sulfur (S), selenium (Se), tellurium (Te), polonium (Po), or a combination thereof.

"Group" means a group of the Periodic Table of the Elements according to the International Union of Pure and Applied Chemistry ("IUPAC") Group 1-18 group classification system.

The first negative active material layer 23 may be a silicon-carbon composite including a silicon particle and a first carbonaceous material, a silicon-carbon composite including a core of a mixture of a silicon particle and a second carbonaceous material and a third carbonaceous material surrounding the core, or a combination thereof. The first carbonaceous material, the second carbonaceous material, and the third carbonaceous material may each independently be crystalline carbon, amorphous carbon, or a combination thereof. The silicon-carbon composite may include a core including a silicon particle and crystalline carbon and an amorphous carbon coating layer on a surface of the core. When the silicon-carbon composite is used as a silicon-based active material, a secondary battery may have large capacity and stable cycle characteristics.

In the silicon-carbon composite including the silicon particle and the first carbonaceous material, a content of the silicon particle may be in a range of about 30 wt% to about 70 wt%, or for example, about 40 wt% to about 50 wt%. In some embodiments, the silicon-based active material may include a silicon-carbon composite including a core of a mixture of a silicon particle and a second carbonaceous material and a third carbonaceous material surrounding the core. When the silicon-carbon composite is used, a secondary battery may have improved capacity retention and may realize very large capacity, and in particular, lifespan characteristics at high temperatures may be improved.

In addition, a content of the third carbonaceous material may be in a range of about 1 wt% to about 50 wt%, and a content of the silicon particle may be in a range of about 30 wt% to about 70 wt%, based on 100 wt% of the silicon-carbon composite. The second carbonaceous material may be included in a range of about 20 wt% to about 69 wt%, based on 100 wt% of the silicon-carbon composite. When the content of each of the silicon particle, the third carbonaceous material, and the second carbonaceous material are each within any of these ranges, a secondary battery may have excellent discharge capacity and improved capacity retention.

A diameter of the silicon particle may be in a range of about 10 nm to about 30 µm, for example, about 10 nm to about 1,000 nm, or about 20 nm to about 150 nm. When an average diameter of the silicon particles is within any of these ranges, volume expansion that may occur during a charge and discharge process may be suppressed, and interruption of electron movement due to particle fragmentation during the charge and discharge process may be prevented.

In the silicon-carbon composite, for example, the second carbonaceous material may be crystalline carbon, and the third carbonaceous material may be amorphous carbon. That is, the silicon-carbon composite may include a core including a silicon particle and crystalline carbon and an amorphous carbon coating layer on a surface of the core.

The crystalline carbon may include artificial graphite, natural graphite, or a combination thereof. The amorphous carbon may include pitch carbon, soft carbon, hard carbon, mesophase pitch carbide, sintered coke, carbon fiber, or a combination thereof. A precursor of the amorphous carbon may be coal-based pitch, mesophase pitch, petroleum-based pitch, coal-based oil, petroleum-based heavy oil or a polymer resin such as phenol resin, furan resin, or polyimide resin.

The silicon-carbon composite may include about 10 wt% to about 60 wt% of silicon, and about 40 wt% to about 90 wt% of the carbonaceous material, based on 100 wt% of the silicon-carbon composite. In the silicon-carbon composite, a content of the crystalline carbon may be in a range of about 10 wt% to about 70 wt%, and a content of the amorphous carbon may be in a range of about 20 wt% to about 40 wt%, based on 100 wt% of the silicon-carbon composite. The average diameter (D50) as used herein refers to a diameter of a particle having an accumulated volume of 50 volume% in a particle size distribution.

The second negative active material layer 24 may be between the negative electrode current collector 21 and the first negative active material layer 23 and may include lithium metal or a lithium alloy.

Examples of the lithium alloy may include a Li-Ag alloy, a Li-Au alloy, a Li-AI alloy, a Li-Sn alloy, a Li-In alloy, a Li-Zn alloy, a Li-Ge alloy, or a Li-Si alloy, but embodiments are not limited thereto.

The second negative active material layer 24 may be prepared while assembling a battery or may be formed as a precipitation layer after charging of a battery not including the second negative active material layer while assembling the battery.

As is further described above, the second negative active material layer 24 may comprise a single metal, composite of two or more metals, or a metal alloy, which may form an alloy phase with lithium, without including lithium metal, lithium alloy, or lithium. Examples of the second negative active material layer 24 include Ag, Sn, Sn-Si alloy, an Ag-Sn alloy, a combination thereof, or a combination of lithium and the foregoing metal.

The lithium may be lithium metal, and the lithium alloy may comprise, for example, a Li-AI alloy, a Li-Sn alloy, a Li-In alloy, a Li-Ag alloy, a Li-Au alloy, a Li-Zn alloy, a Li-Ge alloy, or a Li-Si alloy, but embodiments are not limited thereto. Any suitable lithium alloy available in the art used as a lithium alloy may be used.

The second negative active material layer 24 may comprise one of the foregoing alloys, lithium metal, or several types of alloys.

The interlayer 22 may not include, for example, carbon or a carbonaceous material. The interlayer 22 may not include a carbonaceous material such as a carbonaceous active material such as graphite or carbon black or a carbonaceous conductive material such as carbon nanofiber. The interlayer 22 may not include, for example, an organic material such as a binder. As the interlayer 22 may not include an organic material, a side reaction during a charge and discharge process due to another organic material may be prevented.

In addition, as the interlayer 22 may not include a carbonaceous material, the interlayer 22 may form an interface having a strong binding force with a solid electrolyte, as compared with the first negative active material layer including the carbonaceous active material.

As the interlayer 22 may include the first metal material comprising the first metal, during a charge process, rapid diffusion of lithium ions introduced through the solid electrolyte may be induced. Accordingly, even when a surface of the solid electrolyte layer is irregular, and lithium ions are locally concentrated and introduced, the lithium ions may be evenly distributed throughout the negative electrode by using rapid diffusion of the lithium ions through the interlayer 22.

During the charge process, the interlayer 22 may be formed such that an amount of precipitation of a metal, e.g., a lithium metal or a lithium alloy, may be less than an amount of a metal of the first negative active material layer.

In particular, when the solid electrolyte includes an oxide solid electrolyte, which is harder than the sulfide solid electrolyte, cracks may occur in the solid electrolyte by lithium metal that is locally precipitated in the interlayer. Through these cracks, a problem of lithium metal penetrating the solid electrolyte may occur. Penetration of lithium metal may cause a short circuit, reducing stability of an all-solid secondary battery.

In addition, voids may be formed between the interlayer 22 and the solid electrolyte 30, and a contact area between the interlayer 22 and the solid electrolyte 30 may be reduced during a repeated charging and discharging process by the lithium metal precipitated locally in the interlayer 22. This may lead to overvoltage of an all-solid secondary battery.

However, in the all-solid secondary battery 1 according to an embodiment, an amount of lithium metal precipitated in the interlayer 22 may be minimized by inducing the metal to be precipitated in the first negative active material layer 23. Accordingly, short circuit and overvoltage of the all-solid secondary battery 1 may be prevented.

As the amount of lithium precipitated in the interlayer 22 during a charge process is minimized, a volume change of the interlayer 22 may appear small during a charge and discharge process. A volume change, for example, of an interlayer, is a volume of the interlayer in a state after charging divided by a volume of the interlayer in a state after discharging times 100 %.

For example, a volume of the interlayer 22 in a state after charging may be 150 % or less of a volume of the interlayer 22 in a state after discharging. A volume of the interlayer 22 in a state after charging may be 140 % or less of a volume of the interlayer 22 in a state after discharging. A volume of the interlayer 22 in a state after charging may be 130% or less of a volume of the interlayer 22 in a state after discharging.

For example, in a charge and discharge process, a volume change of the interlayer 22 may be smaller than a volume change of the first negative active material layer 23. In a charge and discharge process, a volume change of the interlayer 22 may be 70 % or less than a volume change of the first negative active material layer 23. In a charge and discharge process, a volume change of the interlayer 22 may be 60 % or less than a volume change of the first negative active material layer 23.

The first metal material comprising the first metal of the interlayer 22 may contain the same metal as the first negative active material layer and the second negative active material layer.

A method of preparing the all-solid secondary battery 1 according to one or more embodiments may include: preparing the negative electrode 20; forming the negative electrode 20 on a first surface of the solid electrolyte 30; and forming the positive electrode 10 on a second surface of the solid electrolyte 30.

Hereinafter, a method of preparing an all-solid secondary battery according to an embodiment will be described in more detail.

The method of preparing an all-solid secondary battery may include: providing a positive electrode; disposing a solid electrolyte on the positive electrode; disposing a negative electrode by disposing an interlayer on a first surface of the solid electrolyte opposite the positive electrode, and then disposing a first negative active material layer on the interlayer, the first negative active material layer including a carbonaceous negative active material, and optionally a first metal negative active material comprising a second metal, a metalloid, or a combination thereof, and disposing a current collector on the first negative active material layer opposite the interlayer to prepare the all-solid secondary battery.

The disposing of the interlayer may include depositing a first metal (M1) on the solid electrolyte in an atmosphere of oxygen, nitrogen, or a combination of oxygen and nitrogen, to form a first layer comprising a first metal (M1) oxide layer, a first metal (M1) nitride layer, a first metal (M1) nitrate layer, or a combination thereof, and using the first layer to dispose a composite comprising a lithium ion conductor and a first metal material comprising a first metal, an alloy comprising the first metal and lithium, a compound comprising the first metal and lithium, or a combination thereof, to provide the interlayer.

In the process of disposing the composite by contacting the first layer with lithium, lithium may be generated during the charge of a battery.

The disposing of the interlayer may include depositing a first metal (M1) on the solid electrolyte in an atmosphere of oxygen, nitrogen, or a combination of oxygen and nitrogen, to form a first metal (M1) oxide, a first metal (M1) nitride, or a first metal (M1) nitrate, or a combination thereof; and using the first layer to dispose a composite comprising a Li-M1 alloy and a lithium ion conductor from the first metal (M1) oxide, the first metal (M1) nitride, or the first metal (M1) nitrate. The first metal (M1) of Li-M1 alloy can be any suitable combination of lithium and the first metal, and stoichiometry is not limited to Li:M1=1:1.

The first metal (M1) oxide may be, for example, tin oxide, silver oxide, zinc oxide, silicon oxide, germanium oxide, tellurium oxide, aluminum oxide, gallium oxide, bismuth oxide, antimony oxide, or a combination thereof. The first metal (M1) nitride may be, for example, tin nitride, silver nitride, zinc nitride, silicon nitride, germanium nitride, tellurium nitride, aluminum nitride, gallium nitride, bismuth nitride, antimony nitride, or a combination thereof.

According to an embodiment, the disposing of the interlayer may include: depositing a first metal (M1) on the solid electrolyte to form a deposited first metal (M1); contacting the deposited first metal (M1) with a compound comprising a halide to form a first metal halide (M1-X), or a mixture of the first metal and the halide, to form a coated solid electrolyte; and drying the coated solid electrolyte to dispose the interlayer, wherein the interlayer comprises a composite comprising a Li-M1 alloy and a lithium ion conductor comprising a lithium halide.

The first metal (M1) may be a metal that may easily react with an anion such as chloride, fluoride, or oxide. The first metal (M1) may be, for example, tin (Sn).

The first metal halide (M1-X) may be, for example, prepared from a starting material comprising HCI, HBr, HF, HI, or a combination thereof, and the first metal (M1). For example the first metal halide (M1-X) may be, for example, SnClₓ (wherein 0<x≤6), SnBrx (wherein 0<x≤6), SnFx (wherein 0<x≤6), SnIₓ (wherein 0<x≤6), BiCl₃, Bi₆Cl₇, BiBrx (wherein 0<x≤6), BiFx (wherein 0<x≤6), Bilx (wherein 0<x≤6), AgFx (wherein 0<x≤4, for example, 0<x≤2), AgClₓ (wherein 0<x≤2), AgBrₓ (wherein 0<x≤2), AgIₓ (wherein 0<x≤2), or a combination thereof.

The contacting of the deposited first metal (M1) with a compound comprising a halide may include, for example, reacting the deposited metal with an aqueous solution or vapor of an aqueous solution comprising an anion. The aqueous solution comprising an anion may comprise, for example, HCI, HBr, HF, or HI. The vapor of the aqueous solution may comprise, for example, HBr, HF, or HI.

During charge and discharge of the all-solid secondary battery disposing the negative electrode current collector to the first negative active material, or a combination thereof, the first metal (M1) in the first negative active material layer may form an alloy with lithium.

The preparing of the negative electrode may include: sequentially bonding a first negative active material layer including a carbonaceous negative active material and optionally a first negative active material comprising a second metal, a metalloid, or a combination thereof, and a second negative active material layer including a third metal (M3), lithium alloy or lithium metal, with the interlayer 22.

The providing of the first negative active material layer may include: coating a composition on a first substrate, and drying the coated first substrate, wherein the composition comprises a carbonaceous negative active material and optionally a first negative active material comprising a second metal, a metalloid, or a combination thereof; and disposing the resulting product on the interlayer and removing the first substrate therefrom.

The first substrate may include materials that are not reactive to lithium and do not form an alloy or a compound with lithium. Materials included in the first substrate 100 may include, for example, copper (Cu), stainless steel, titanium (Ti), iron (Fe), cobalt (Co), nickel (Ni), or a combination thereof, but embodiments are not limited thereto. Any suitable material available in the art may be used. The first substrate may include one type of the metal described above, or an alloy of at least two metals or a coating material. The first substrate may be, for example, in a plate shape or a foil shape. The first substrate may be, for example, a stainless steel substrate or a negative electrode current collector.

The method of preparing an all-solid secondary battery may include disposing (e.g. bonding) the first negative active material layer to the interlayer through pressure or compression.

The pressure applied during the compression may be, for example, about 150 megapascals (MPa) or more. The pressure applied during the compression may be, for example, about 250 MPa or more. The pressure applied during the pressurization may be, for example, about 1,000 MPa or more, e.g., about 150 MPa to about 10,000 MPa, or about 300 MPa to about 5000 MPa, or about 500 MPa to about 2000 MPa.

The time the compression is applied may be within 10 minutes. For example, the time for the compression to be applied may be in a range of about 5 milliseconds (ms) to about 10 minutes (min). For example, the time for the pressure to be applied may be in a range of about 2 min to about 7 min.

The compression may be, for example, performed at room temperature (25 °C). The pressurization may be, for example, performed at a temperature of about 1 °C to about 25 °C. However, the compression temperature is not necessarily limited thereto, and the pressurization temperature may be about 25 °C to about 90 °C, or a high temperature of 100 °C or higher, e.g., 100 °C to 500 °C.

The compression may be, for example, roll pressing, uni-axial pressing, flat pressing, warm isotactic pressing (WIP), or cold isotactic pressing (CIP), but is not necessarily limited thereto. Any suitable compression method available in the art may be used.

The second negative active material layer may be a lithium precipitation layer that may prevent direct contact between a solid electrolyte and lithium metal by inducing lithium metal to precipitate on the negative electrode current collector 21.

The second negative active material layer may comprise lithium metal or a third metal (M3) coated on a current collector. In an embodiment, the second negative active material layer may be a lithium metal precipitated while charging, or a lithium alloy layer precipitated while charging. During charge of a battery, lithium precipitation may increase a volume and a thickness of the second negative active material layer. In addition, the third metal (M3) may form a Li-M3 alloy through a reversible reaction during a charge and discharge process of an all-solid secondary battery. During charge and discharge of the all-solid secondary battery, disposing the current collector on the first negative active material, or a combination thereof, a second negative active material layer may be formed as a precipitation or deposition layer, and the second negative active material layer may be a lithium metal layer or a lithium metal alloy layer.

During charge and discharge, of the all-solid secondary battery, disposing the current collector to the first negative active material, or a combination thereof, the third metal (M3) in the second negative active material layer may form an alloy with lithium.

The method of preparing an all-solid secondary battery may include disposing the negative electrode current collector with the second negative active material layer to the first negative active material layer, the interlayer, and the electrolyte assembly through pressurization. During the pressurization process, a portion of lithium included in the second negative active material layer may be injected into the first negative active material layer and/or interlayer.

The disposing (e.g., bonding) may be a compression process. During the pressurization process, a portion of lithium included in the second negative active material layer may be injected into the first negative active material layer and/or the interlayer. Accordingly, the first negative active material layer may include a carbonaceous active material and lithium, and the interlayer may have a composite including a lithium ion conductor and a lithium-M1 alloy.

According to one or more embodiments, the third negative active material layer may be formed as a precipitation layer during charge and discharge, of the all-solid secondary battery, disposing of the negative electrode current collector to the first negative active material layer, or a combination thereof. The third negative active material layer may be a lithium metal layer or a lithium metal alloy layer. A thickness of the third negative active material layer may be, for example, about 1 micrometer (µm) or greater, about 5 µm or greater, about 10 µm or greater, about 10 µm to about 1,000 µm, about 10 µm to about 500 µm, about 10 µm to about 200 µm, about 10 µm to about 100 µm, or about 10 µm to about 50 µm.

### Preparation of positive electrode

First, materials, such as a positive active material, a binder, of the positive active material layer may be added to a nonpolar solvent to thereby prepare a slurry. The prepared slurry may be coated on the positive electrode current collector 11, followed by drying. The resulting laminate may be pressurized to prepare a positive electrode 10. The pressurization may be performed by, for example, roll pressing, flat pressing, pressing using hydrostatic pressure, but embodiments are not limited thereto. Any suitable pressurizing available in the art may be used. The pressurization may be omitted. A mixture of materials of the positive active material layer 12 may be compressed to mold the positive electrode 10 in a pellet shape or in a sheet shape. When the positive electrode 10 is prepared as above, the positive electrode current collector 11 may be omitted. In some embodiments, the positive electrode 10 may be impregnated in an electrolyte to be used.

### Preparation of solid electrolyte

The solid electrolyte 30 including an oxide-based solid electrolyte may be, for example, prepared by heat-treating a precursor of an oxide-based solid electrolyte material.

The oxide-based solid electrolyte may be prepared by contacting the precursor in a stoichiometric amount to form a mixture, and then heat-treating the mixture. The contacting may include milling or grinding, for example, ball milling. A mixture of precursors mixed with a stoichiometric composition may be subjected to primary heat treatment in an oxidizing atmosphere to prepare a primary heat treatment resulting product. The primary heat treatment may be performed for about 1 hour to about 36 hours at a temperature range of about 1,000 °C or less. The primary heat treatment resulting product may be ground. The grinding of primary heat treatment product may be carried out either in a dry method or in a wet method. The wet grinding may be, for example, performed by mixing a solvent such as methanol and the primary heat treatment product, and then milling with a ball mill for about 0.5 hours to about 10 hours. The dry grinding may be performed by milling with a ball mill without a solvent. A diameter of the ground primary heat treatment resulting product may be in a range of about 0.1 µm to about 10 µm, or about 0.1 µm to about 5 µm. The ground primary heat treatment resulting product may be dried. The ground primary heat treatment resulting product may be mixed with a binder solution and molded into pellets or simply pressed at a pressure in a range of about 1 ton to about 10 tons and molded into pellets.

The molding may be subjected to secondary heat treatment at a temperature of less than about 1,500 °C for about 1 hour to about 36 hours. The sintered product, the solid electrolyte 30, may be obtained by the secondary heat treatment. The secondary heat treatment may be performed, for example, at a temperature of about 550 °C to about 1,000 °C. The secondary heat treatment may be performed for about 1 hour to about 36 hours. To obtain a sintered product, the secondary heat treatment temperature is higher than the primary heat treatment temperature. For example, the secondary heat treatment temperature may be higher than the primary heat treatment temperature by about 10 °C or more, about 20 °C or more, about 30 °C or more, or about 50 °C or more. The molding may be subjected to secondary heat treatment in an oxidizing atmosphere a reducing atmosphere, or a combination thereof.

The solid electrolyte 30 including a sulfide-based solid electrolyte may be prepared, for example, by using a solid electrolyte formed of a sulfide-based solid electrolyte material.

With regard to the sulfide-based solid electrolyte, the starting material may be treated by, for example, a melt quenching method or a mechanical milling method, but embodiments are not necessarily limited thereto. Any suitable method available in the art as a method of preparing a sulfide-based solid electrolyte may be used. For example, when the melt quenching method is used, first, Li₂S and P₂S₅ may be mixed in a given ratio, and the mixture is compressed into pellets. The pellets may then be treated at a reaction temperature in vacuum and quenched to prepare a sulfide-based solid electrolyte material. In this regard, a reaction temperature of the mixture of Li₂S and P₂S₅ may be in a range of about 400 °C to about 1,000 °C, for example, in a range of about 800 °C to about 900 °C. The reaction time may be, for example, about 0.1 hour to about 12 hours or about 1 hour to about 12 hours. In addition, a temperature during the quenching of the reactant may be about 10 °C or lower, for example, about 0 °C or lower, and a quenching rate may be in a range of about 1 °C/second (°C/sec) to about 10,000 °C/sec, for example, about 1 °C/sec to about 1,000 °C/sec. For example, when the mechanical milling method is used, a sulfide-based solid electrolyte material may be prepared by stirring and reacting a starting material such as Li₂S or P₂S₅ using a ball mill. Although the stirring rate and duration of the mechanical milling method are not particularly limited, as the stirring rate increases, a rate of production of the sulfide-based solid electrolyte material may increase, and as the stirring duration increases, a conversion rate of raw materials into the sulfide-based solid electrolyte material may increase. Then, mixed raw materials prepared by the melt quenching method or the mechanical milling method may be thermally treated at a given temperature and ground to prepare the solid electrolyte in a particle form. In a case where the solid electrolyte has glass transition properties, the solid electrolyte may be crystalline due to heat treatment.

The thus produced solid electrolyte may be used to form the solid electrolyte 30 by any suitable known method for layer formation, such as deposition, aerosol deposition, cold spraying, or sputtering. In some embodiments, the solid electrolyte 30 may be prepared by pressurizing a solid electrolyte particle. In some embodiments, the solid electrolyte 30 may be prepared by mixing a solid electrolyte, a solvent, and a binder followed by coating, drying, and pressurizing.

### Manufacture of all-solid secondary battery

An assembly of the negative electrode 20 and the solid electrolyte 30, and the positive electrode 10 may be prepared, and then, the solid electrolyte 30 may be placed between the positive electrode 10 and the negative electrode 20, followed by pressurization, thereby completing the manufacture of an all-solid secondary battery.

The pressurization may be, for example, roll pressing, uni-axial pressing, flat pressing, warm isotactic pressing (WIP), cold isotactic pressing (CIP), or a combination thereof, but is not necessarily limited thereto. Any suitable pressurization method available in the art may be used. The pressure applied during the pressurization may be, for example, about 50 MPa to about 750 MPa. The time for the pressure to be applied may be in a range of about 5 ms to about 5 min. The pressurization may be performed at, for example, room temperature to a temperature lower than about 90 °C or at about 20 °C to about 90 °C. In some embodiments, the pressurization may be performed at a high temperature of about 100 °C or higher.

Next, the positive electrode 10 may be placed on another surface of the solid electrolyte 30 to which the negative electrode 20 is disposed (e.g., bonded), and compressed with a given pressure to dispose (e.g., bond) the positive electrode 10 to the other surface of the solid electrolyte 30. In some embodiments, when the positive electrode 10 is impregnated with a liquid electrolyte, a battery may be manufactured by laminating without pressure.

The pressurization may be, for example, roll pressing, uni-axial pressing, flat pressing, warm isotactic pressing (WIP), cold isotactic pressing (CIP), or a combination thereof, but is not necessarily limited thereto. Any suitable pressurization method available in the art may be used. The pressure applied during the pressurization may be, for example, about 50 MPa to about 750 MPa. The time for the pressure to be applied may be in a range of about 5 ms to about 5 min. The pressurization may be performed at, for example, room temperature to a temperature lower than about 90 °C or at about 20 °C to about 90 °C. In some embodiments, the pressurization may be performed at a high temperature of about 100 °C or higher.

According to an embodiment, a battery comprising:
a positive electrode; and
the negative electrode-solid electrolyte sub-assembly according to the embodiment on the positive electrode;
wherein the solid electrolyte is between the positive electrode and the negative electrode is provided.

The positive electrode includes a liquid electrolyte.

The negative electrode-solid electrolyte sub-assembly according to the embodiment includes
a negative electrode current collector;
a first negative active material layer on the current collector;
an interlayer on the first negative active material layer; and
a solid electrolyte on the interlayer and opposite the first negative active material layer,
wherein the interlayer comprises a composite comprising a first metal material and a lithium ion conductor, wherein the first metal material comprises a first metal, an alloy comprising the first metal and lithium, a compound comprising the first metal and lithium, or a combination thereof, wherein the first negative active material layer comprises a carbonaceous negative active material, and optionally a first negative active material comprising a second metal, a metalloid, or a combination thereof.

The negative electrode-solid electrolyte sub-assembly is the same as described in the negative electrode-solid electrolyte sub-assembly for an all-solid-state battery, except that the positive electrode contains a liquid electrolyte.

The configuration and method of manufacturing the all-solid secondary battery 1 described above are illustrative purposes only, and the elements and the manufacturing procedure may be appropriately changed. The pressurization may be omitted.

Hereinafter the inventive concept will be described in detail with reference to Examples and Comparative Examples. These examples are for illustrative purposes only and are not intended to limit the scope of the inventive concept.

### EXAMPLES

### Example 1: NCA (5.1 mAh/cm²)/LLZTO/LiₓSn (O<x≦5)+LiCl composite/AgC/Li metal structure

### Preparation of negative electrode-solid electrolyte sub-assembly

LLZTO(Li_{6.5}La₃Zr_{1.5}Ta_{0.5}O₁₂) pellets having a thickness of 350 µm was prepared as a solid electrolyte.

Sn was deposited on the solid electrolyte at a temperature of 25 °C to form a Sn layer having a thickness of about 100 nm, followed by dipping in 0.1 M HCI for 10 seconds. Then, the resulting product of the dipping in HCI was dried at a temperature of 25 °C to form a Sn-Clx (0<x≤6) composite layer, that is, a pre-first negative electrode on the solid electrolyte, thereby preparing a laminate of solid electrolyte /pre-interlayer.

In addition, a first negative active material layer having a thickness of 10 µm and containing a composite (AgC) including a carbonaceous active material and silver (Ag) was prepared on a stainless steel substrate having a thickness of 10 µm.

To prepare the first negative active material layer, 3 g of carbon black (CB) having a diameter of about 38 nm as a carbonaceous material and 1g of silver (Ag) particles having an average particle diameter of about 100 nm was mixed, a mixture of 2.692 grams (g) of PVA-PAA binder solution (Solvay Specialty Polymers. Solef 5130) and 7 g of NMP(N-Methyl-2-pyrrolidone) was added thereto, then the resulting mixture was primary stirred at 1,000 rotations per minute (rpm) for 30 minutes to prepare a slurry, and next, the slurry was bar-coated on a stainless steel substrate, dried at room temperature (25°C) for 1 hour, and vacuum-dried for 12 hours.

The first negative active material layer was attached on the pre-interlayer in the laminate of the solid electrolyte/pre-interlayer. Then, the attached laminate was compressed by cold isotactic pressing CIP at a pressure of 250 MPa at a temperature of 25 °C. Then, the stainless-steel substrate attached to the first negative active material layer was removed therefrom, thereby preparing a laminate of solid electrolyte /pre-interlayer/first negative active material layer.

A second negative active material layer, in which a copper (Cu) foil that is a negative electrode current collector having a thickness of 10 µm coated with lithium (Li) metal having a thickness of 20 µm, was stacked on the first negative active material layer in the laminate of solid electrolyte /pre-interlayer/first negative active material layer. Then, the laminate was compressed with a pressure of 250 MPa applied thereto at a temperature of 25 °C by CIP thereby preparing a laminate of solid electrolyte /negative electrode having a stacked structure of solid electrolyte / pre-interlayer or interlayer/first negative active material layer/second negative active material layer/negative electrode current collector.

### Preparation of positive electrode

LiNi_{0.8}Co_{0.15}Al_{0.05}O₂ (NCA) was prepared as a positive active material. In addition, polytetrafluoroethylene (DuPont ^{™}Teflon binder) was prepared as a binder. The binder was used in a form of a solution, dissolved in N-Methyl-2-pyrrolidone (NMP) at a ratio of 5 % by weight based on a total weight of a total solution. In addition, Denka Black (DB) was prepared as a conductive aid.

Then, these materials were mixed in a weight ratio of positive active material:conductive aid:binder=100:2:1 to prepare a slurry-type mixture. The slurry was coated on a positive electrode current collector of 18 µm-thick aluminum foil, dried at 120 °C for 12 hours, and compressed to produce a positive electrode.

The positive active material layer of the prepared positive electrode was impregnated in an electrolytic solution obtained by dissolving 2.0 M of lithium bisfluorosulfonimide (LiFSI) in an ionic liquid of N-propyl-N-methyl-pyrrolidinium bis(fluorosulfonyl)imide (PYR13FSI).

### Manufacture of all-solid secondary battery

The positive electrode was placed such that the positive active material layer impregnated in the electrolytic solution containing the ionic liquid in the stainless steel (SUS) cap facing the top. An all-solid secondary battery was manufactured by placing a laminate of solid electrolyte /negative electrode with a negative electrode attached to the laminate such that the solid electrolyte was disposed on the positive active material layer and sealing the structure. The positive electrode and the negative electrode were insulated with an insulator. A part of the positive electrode current collector and a part of the negative electrode current collector were protruded to the outside of the sealed battery and used as a positive electrode terminal and a negative electrode terminal, respectively.

The thus produced all-solid secondary battery, upon charge, included a composite containing LiₓSn (0<x≤5) and LiCI in the interlayer. The thickness of the interlayer was about 300 nm. The composition of the composite containing LiₓSn (0<x≤5) and LiCI was identified by XPS analysis. The interlayer was formed by reacting with the lithium metal stacked on the pre-interlayer or formed during the charging process of the all-solid-state secondary battery.

### Example 2: NCA (5.1 mAh/cm²)/LLZTO/LiₓSn (0<x≦5)+lithium oxide (Li₂O) composite/AgC/Li metal structure

An all-solid secondary battery was manufactured in the same manner as in Example 1, except that a laminate of solid electrolyte /pre-interlayer was prepared as follows.

Deposition was performed on the solid electrolyte by radio frequency (RF) sputtering at a temperature of 25 °C to form an SnOₓ (0<x<3) layer that is a pre-interlayer having a thickness of about 100 nm to thereby prepare a laminate of solid electrolyte/pre-interlayer.

The thus produced all-solid secondary battery in Example 2, after charge and discharge, included a composite containing a LiₓSn (0<x≦5) and lithium oxide (Li₂O) in the interlayer. LiₓSn (0<x≦5) may be, for example, Li_{4.4}Sn.

### Example 3: NCA (5.1 mAh/cm²)/LLZTO/LiₓSn (0<x<5)+LiCl composite/AgC/Ag layer/Cu foil (precipitation type)

An all-solid secondary battery was manufactured in the same manner as in Example 1, except that a laminate of solid electrolyte /pre-interlayer/first negative active material layer/second negative active material layer/negative electrode current collector was prepared as follows.

A silver (Ag) layer having a thickness of 20 nm to 1 µm, for example, about 500 nm was formed on a copper (Cu) foil that is a negative electrode current collector having a thickness of 10 µm. Then, the resulting structure was stacked on the first negative active material layer in the solid electrolyte /interlayer/first negative active material layer. Here, the silver layer was placed to contact the first negative active material layer. The stacked resultant was pressurized at 250 MPa at a temperature of 25 °C by CIP to thereby prepare a laminate of solid electrolyte /interlayer/first negative active material layer/second negative active material layer/negative electrode current collector.

The thus produced all-solid secondary battery in Example 3 included, after charge and discharge, a lithium metal layer as a precipitation layer between the silver layer and the copper foil.

In Example 3, the assembly was NCA (5.1 mAh/cm²)/LLZTO/ Sn-Clx (0<x≤6) composite layer /AgC/Ag layer/Cu foil (precipitation type) in the initial assembly state, and after charging, the assembly had a stacked structure of NCA (5.1 mAh/cm²)/LLZTO/LiₓSn (0<x≤5)+LiCl composite/AgC/Li-Ag alloy layer/Cu foil (precipitation type). The Li-Ag alloy layer was formed by reaction of precipitated Li and Ag. The interlayer included a composite containing LiₓSn (0<x≤5) and LiCI.

### Example 4: NCA (5.1 mAh/cm²)/LLZTO/LiAg+LiCl composite/AgC/Ag layer/Cu foil (precipitation type)

An all-solid secondary battery was manufactured in the same manner as in Example 3, except that a laminate of solid electrolyte /pre-interlayer was prepared as follows.

Silver (Ag) was deposited on the solid electrolyte at a temperature of 25 °C to form an Ag layer having a thickness of 20 nm to 500 nm, f
or example, about 20 nm, followed by dipping in 1 M HCI for 1 minute. Then, the resulting product of the dipping in HCI was dried at a temperature of 25 °C to form an Ag-CI composite layer, that is, a pre-interlayer, on the solid electrolyte, thereby preparing a laminate of solid electrolyte /pre-interlayer.

The thus produced all-solid secondary battery in Example 4 included, after charge and discharge, a lithium-silver alloy metal layer formed between the first negative active material layer and the copper foil.

In Example 4, the assembly was NCA (5.1 mAh/cm²)/LLZTO/Ag+Cl composite/AgC/Ag layer/Cu foil (precipitation type) in the initial assembly state, and after charging, the assembly had a stacked structure of NCA (5.1 mAh/cm²)/LLZTO/LiAg+LiCl composite/AgC/Li-Ag alloy layer formed by reaction between precipitated Li and Ag/Cu foil (precipitation type). The interlayer contained LiAg+LiCl composite.

### Example 5: NCA (5.1 mAh/cm²)/LLZTO/LiAg+LiCl composite/AgC/Free metal layer/Cu foil (precipitation type)

An all-solid secondary battery was manufactured in the same manner as in Example 4, except that a laminate of solid electrolyte/pre-interlayer/first negative active material layer/negative electrode current collector was prepared as follows.

Silver (Ag) was deposited on the solid electrolyte at a temperature of 25 °C to form an Ag layer having a thickness of 20 nm to 500 nm, for example, about 20 nm, followed by dipping in 1 M HCI for 1 minute. Then, the resulting product of the dipping in HCI was dried at a temperature of 25 °C to form an Ag-CI composite layer, that is, a pre-first negative electrode, on the solid electrolyte, thereby preparing a laminate of solid electrolyte /pre-interlayer.

In addition, a first negative active material layer having a thickness of 10 µm and containing a composite (AgC) including a carbonaceous active material and silver (Ag) was prepared on a copper (Cu) foil that is a negative electrode current collector having a thickness of 10 µm. The first negative active material layer was attached on the pre-interlayer in the laminate of the solid electrolyte/pre-interlayer. Then, the laminate was compressed with a pressure of 250 MPa applied thereto at a temperature of 25 °C by CIP thereby preparing a laminate of solid electrolyte/negative electrode having a stacked structure of solid electrolyte/pre-interlayer/first negative active material layer/negative electrode current collector.

The thus produced all-solid secondary battery in Example 5 included, after charge and discharge, a lithium-silver alloy metal or a lithium metal layer or a mixture of them formed between the first negative active material layer and the copper foil.

In Example 5, the assembly was NCA (5.1 mAh/cm²)/LLZTO/Ag+Cl composite/AgC/Free metal layer/Cu foil (precipitation type) in the initial assembly state, and after charging, the assembly had a stacked structure of NCA (5.1 mAh/cm²)/LLZTO/LiAg+LiCl composite/AgC/Li-Ag alloy layer or lithium metal layer or a mixture of them formed by precipitation of lithium metal or/and the reaction between precipitated Li and Ag in the first negative active material/Cu foil (precipitation type). The interlayer contained LiAg+LiCl composite.

### Example 6: NCA (5.1 mAh/cm²)/LLZTO/LiSnₓ+LiCl composite/C/Li metal structure/Cu foil

An all-solid secondary battery was manufactured in the same manner as in Example 1, except that a laminate of solid electrolyte/interlayer/first negative active material layer/second negative active material layer/negative electrode current collector was prepared as follows.

Sn was deposited on the solid electrolyte at a temperature of 25 °C to form a Sn layer having a thickness of about 100 nm, followed by dipping in 0.1 M HCI for 10 seconds. Then, the resulting product of the dipping in HCI was dried at a temperature of 25 °C to form a Sn-Clx (0<x≤6) composite layer, that is, a pre-first negative electrode on the solid electrolyte, thereby preparing a laminate of solid electrolyte /pre-interlayer.

A first negative active material layer having a thickness of 10 µm and containing a carbonaceous active material was prepared on a stainless steel substrate having a thickness of 10 µm. To prepare the first negative active material layer, a mixture of 2.692 grams (g) of PVA-PAA binder solution (Solvay Specialty Polymers. Solef 5130) and 7 g of NMP(N-Methyl-2-pyrrolidone) was added to 4 g of carbon black (CB) having a diameter of about 38 nm as a carbonaceous material, then the resulting mixture was primary stirred at 1,000 rotations per minute (rpm) for 30 minutes to prepare a slurry, and next, the slurry was bar-coated on a stainless steel substrate, dried at room temperature (25°C) for 1 hour, and vacuum-dried for 12 hours.

Then, the first negative active material layer was attached on the pre-interlayer in the laminate of the solid electrolyte/pre-interlayer. Then, the attached laminate was compressed by cold isotactic pressing CIP at a pressure of 250 MPa at a temperature of 25 °C. Then, the stainless-steel substrate attached to the first negative active material layer was removed therefrom, thereby preparing a laminate of solid electrolyte /pre-interlayer/first negative active material layer.

A second negative active material layer, in which a copper (Cu) foil that is a negative electrode current collector having a thickness of 10 µm coated with lithium (Li) metal having a thickness of 20 µm, was stacked on the first negative active material layer in the laminate of solid electrolyte /pre-interlayer/first negative active material layer. Then, the laminate was compressed with a pressure of 250 MPa applied thereto at a temperature of 25 °C by CIP thereby preparing a laminate of solid electrolyte /negative electrode having a stacked structure of solid electrolyte /interlayer/first negative active material layer/second negative active material layer/negative electrode current collector.

The thus produced all-solid secondary battery in Example 6, after charge and discharge, included a composite containing LixSn (0<x≤5) and LiCI in the interlayer.

### Comparative Example 1: NCA (5.1 mAh/cm²)/LLZTO/LiSn/AgC/Li metal structure negative electrode

An all-solid secondary battery was manufactured in the same manner as in Example 1, except that a laminate of solid electrolyte/pre-first negative electrode was prepared as follows.

Deposition was performed on the solid electrolyte by RF sputtering at a temperature of 25 °C to form an Sn layer having a thickness of about 100 nm to thereby prepare a laminate of solid electrolyte/Sn layer.

The thus produced all-solid secondary battery in Comparative Example 1, after charge and discharge, contained a LiₓSn (0<x<5) layer in the first negative electrode.

When an experiment is carried out according to Comparative Example 1, the interlayer did not completely cover the surface of the solid electrolyte, or severe volume expansion occurred during repeated charge and discharge, resulting in failure to prevent short circuit.

### Comparative Example 2: NCA (5.1 mAh/cm²)/LLZTO/Li₂Zn/AgC/Li metal structure negative electrode

An all-solid secondary battery was manufactured in the same manner as in Comparative Example 1, except that a laminate of solid electrolyte/pre-interlayer was prepared as follows.

Deposition was performed on the solid electrolyte by RF sputtering at a temperature of 25 °C to form an Zn layer that is a pre-interlayer to thereby prepare a laminate of solid electrolyte/pre-interlayer. The thus produced all-solid secondary battery in Comparative Example 2, after charge and discharge, contained a Li₂Zn layer in the interlayer .

### Comparative Example 3: NCA (5.1 mAh/cm²)/LLZTO/AgC/Ag layer/Cu foil (precipitation type)

An all-solid secondary battery was manufactured in the same manner as in Example 3, except that an interlayer was not formed between the solid electrolyte and the first negative active material layer.

The all-solid secondary battery manufactured in Comparative Example 3 had an interfacial resistance after assembly greater than an interfacial resistance of Example 3 or 4, and after charge and discharge, separation between the first negative active material layer and the solid electrolyte occurred.

### Comparative Example 4: NCA (5.1 mAh/cm²)/LLZTO/simple blend of LiₓSn (0<x<5) and Li₂O/AgC/Li metal structure negative electrode

A negative electrode and an all-solid secondary battery including the negative electrode were manufactured in the same manner as in Example 2, except that a laminate of solid electrolyte/pre-interlayer was prepared as follows.

The laminate of solid electrolyte/pre-interlayer was prepared by mixing Sn and Li₂O at a weight ratio of 1:1 and coating and drying the mixture on the solid electrolyte.

The all-solid secondary battery prepared in Comparative Example 4 contained a simple blend of LiₓSn (0<x<5) and Li₂O unlike the interlayer prepared in Example 2.

### Evaluation Example 1: SEM-EDS analysis

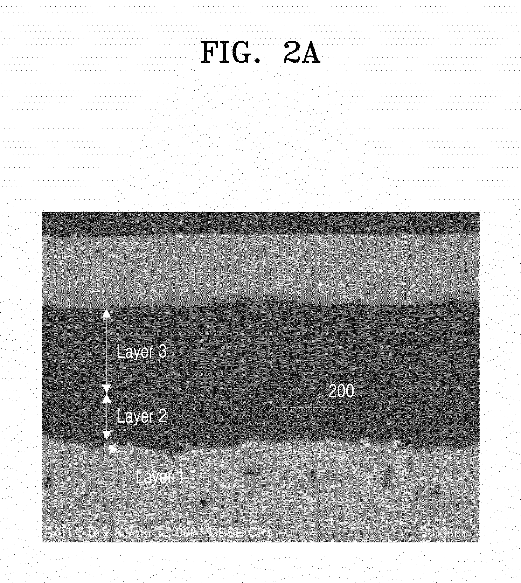

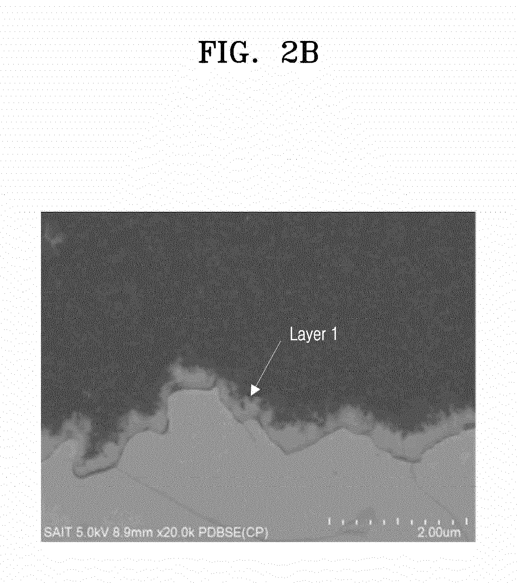

The all-solid secondary battery prepared in Example 1 was charged, and the laminate of solid electrolyte/interlayer/first negative active material layer/second negative active material layer was subjected to a scanning electron microscopy/energy dispersive X-Ray spectroscopy (SEM/EDS) analysis. The results of the analysis are shown in FIGS. 2A and 2B.

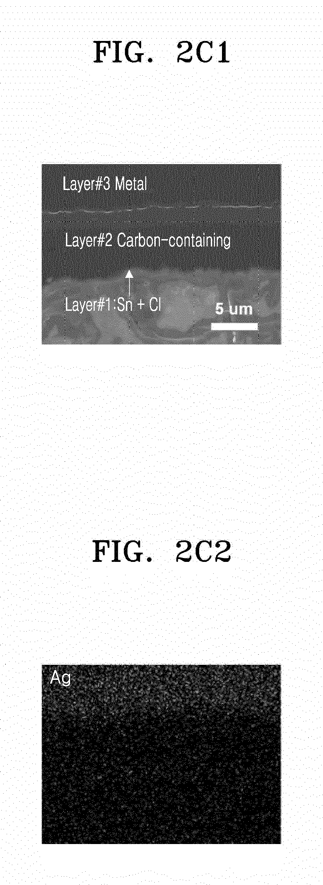

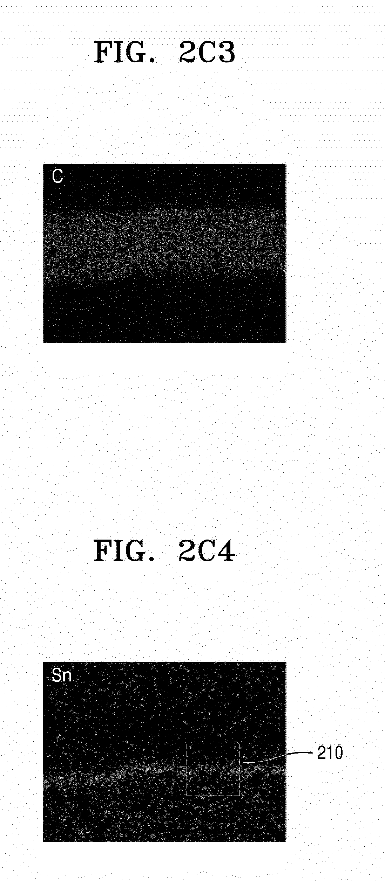

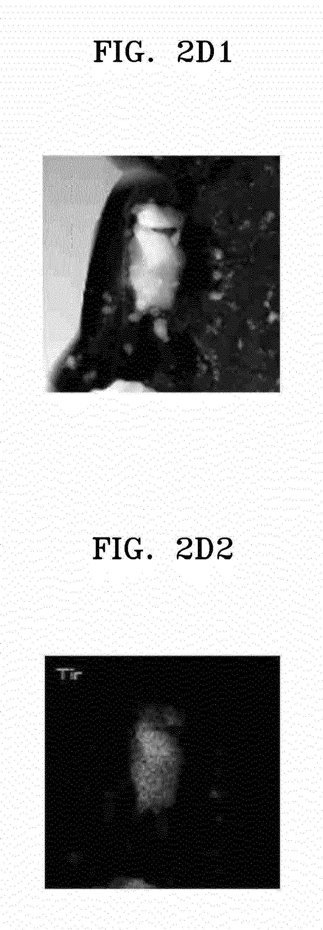

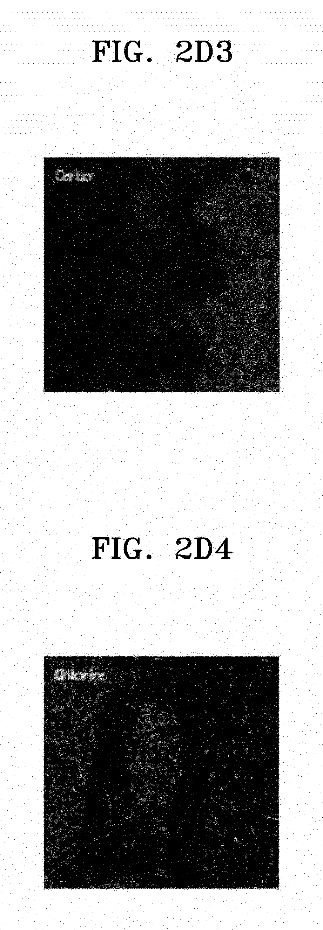

FIG. 2A shows results of a scanning electron microscopy (SEM) analysis on the laminate. FIG. 2B is an enlarged view of the indicated area 200 in FIG. 2A. The results of the EDS analysis on the negative electrode are shown in FIGS. 2C1-2C4. FIGS. 2D1-2D4 is an enlarged view of the indicated area 210 in FIG. 2C4.

As shown in FIGS. 2A and 2B, according to Example 1, the interlayer (Layer 1), the first negative active material layer (Layer 2), and the second negative active material layer (Layer 3) were sequentially formed between the solid electrolyte and the negative electrode current collector. As shown in FIGS. 2C1-2C4, the interlayer contained tin (Sn) and chlorine (CI), the first negative active material layer contained carbon (C) and silver (Ag), and the second negative active material layer contained silver (Ag).

As shown in FIGS. 2D1-2D4, in the interlayer, tin (Sn) and chlorine (CI) were distributed in the same region, or Sn and CI presented in the same region.

### Evaluation Example 2: Evaluation of interfacial resistance

The interfacial resistance of each of the all-solid secondary batteries manufactured in Example 3, Example 4, and Comparative Example 3 was evaluated. The impedance of pellets of each the all-solid secondary batteries was measured by using an impedance analyzer (Solartron 1400A/1455A) according to 2-probe method at a temperature of 25 °C in an atmospheric condition. The frequency range was 0.1 Hertz (Hz) to 1 MHz, and the amplitude voltage was 10 milli volts (mV).

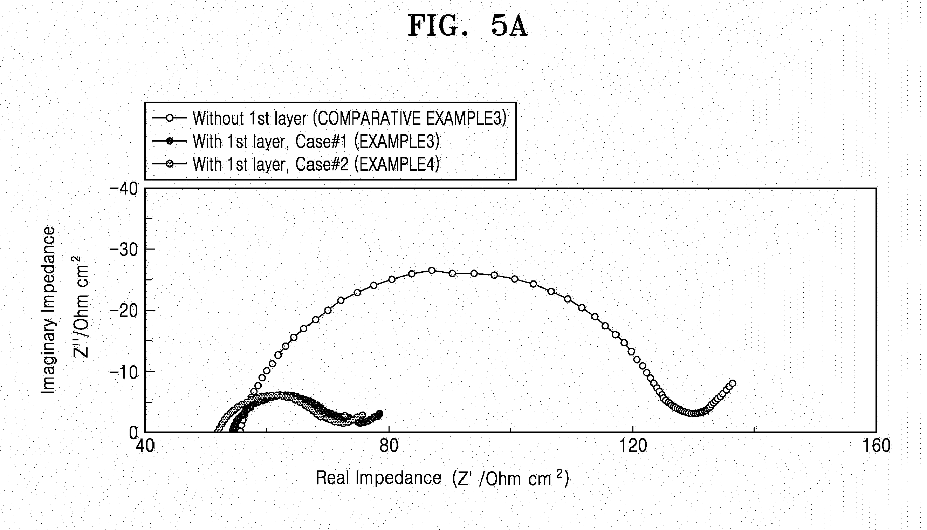

FIG. 5A shows a Nyquist plot illustrating results of impedance measurement.

As shown in FIG. 5A, the all-solid secondary batteries of Examples 3 and 4 were found to have significantly decreased interfacial resistance, as compared with the all-solid secondary battery of Comparative Example 3.

### Evaluation Example 3: Charge/discharge test (I)

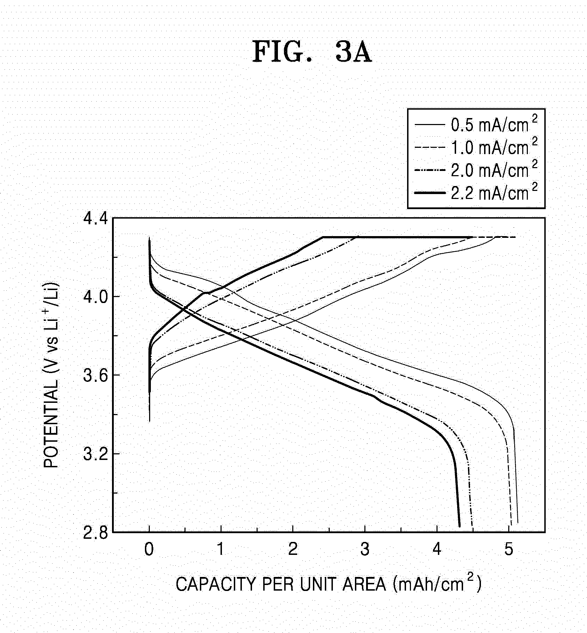

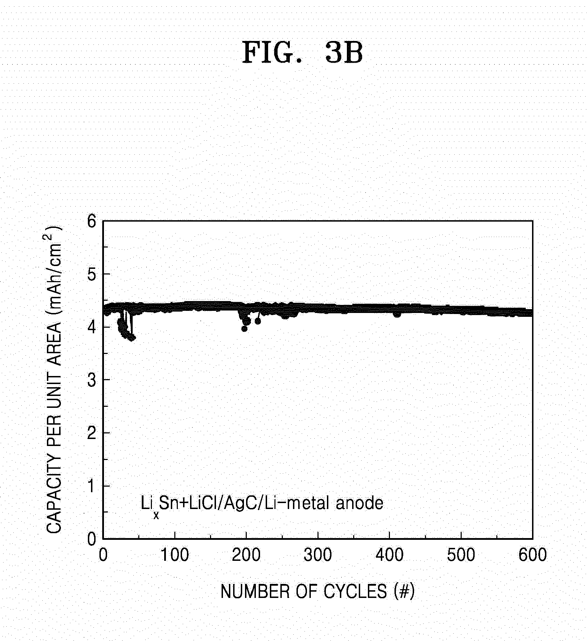

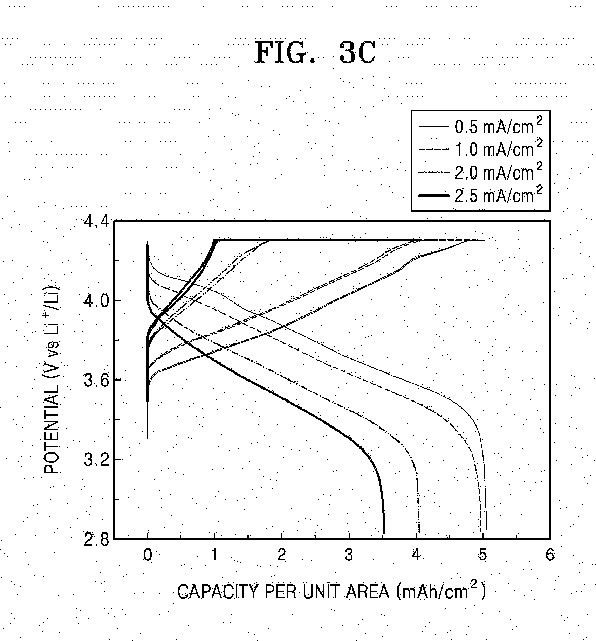

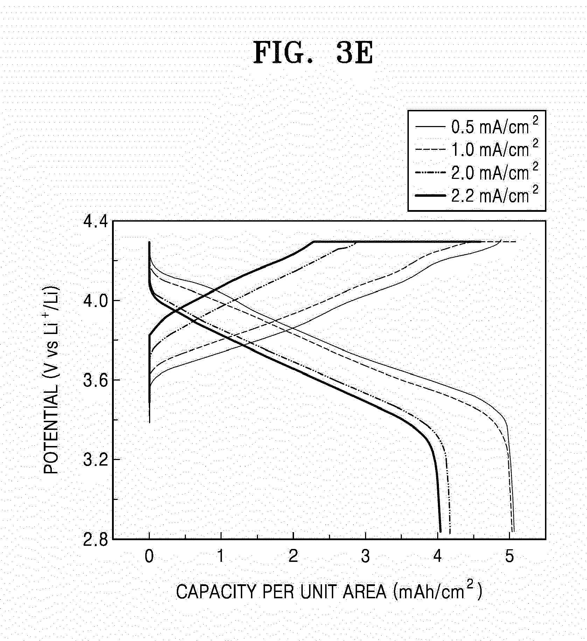

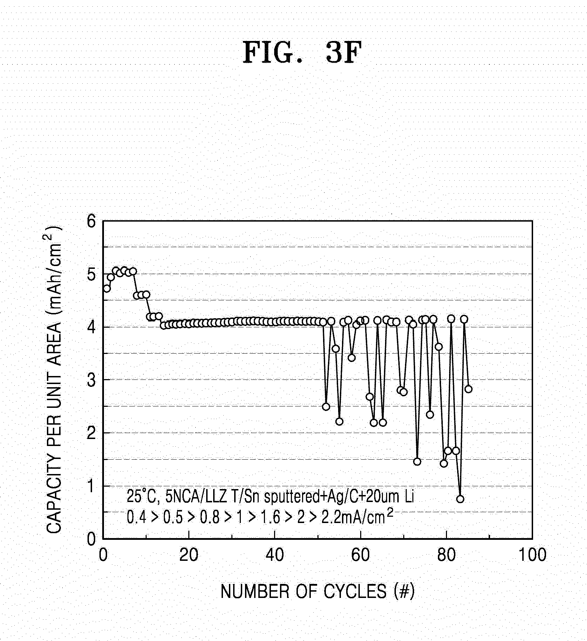

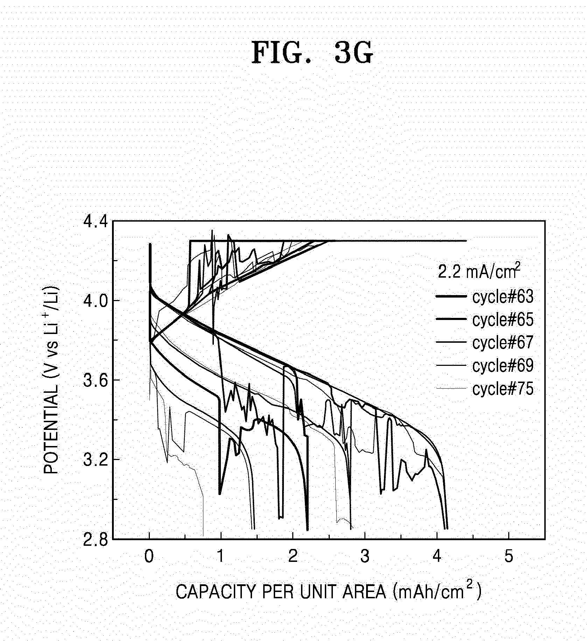

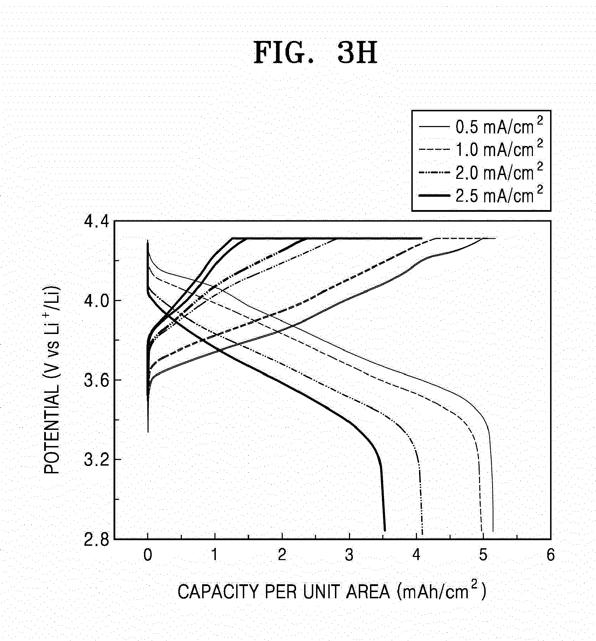

Charge/discharge characteristics of the all-solid secondary batteries of Examples 1 and 2 and Comparative Examples 1 and 2 were evaluated by the following charge/discharge test. In the charge/discharge test, charging and discharging were performed while changing the current density as shown in FIGS. 3A, 3C, 3E, and 3H at a temperature of 25 °C to identify driving characteristics in a high current density state of the all-solid secondary batteries.
As shown in FIGS. 3A and 3B, the all-solid secondary battery of Example 1 subjected to charge and discharge up to 600 cycles without short circuit and showed stable charge and discharge even at a current density of 2.2 mA/cm². The all-solid secondary battery of Example 1 showed high charge and discharge efficiency even at the 600^{th} cycle. Therefore, the all-solid secondary battery of Example 1 was found to maintain a stable interface in the charge and discharge process, as shown in FIG. 3A. In addition, the all-solid secondary battery of Example 1, as shown in FIG. 3B, was found to have improved lifespan characteristics, as compared with the all-solid secondary battery of Comparative Example 1 shown in FIG. 3F and the all-solid secondary battery of Comparative Example 2 shown in FIG. 31. The current density for Fig. 3B was 2.2 mA/cm².

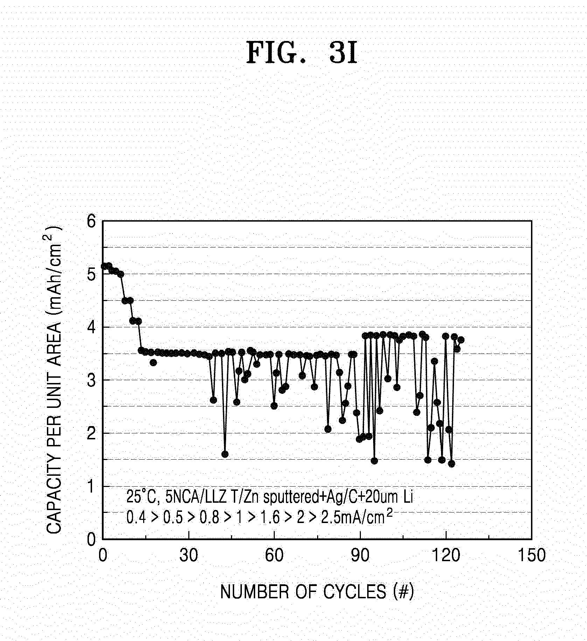

In FIG. 3F_ 0.4 > 0.5 > 0.8 > 1 > 1.6 > 2 > 2.2mA/cm² indicates 1st cycle: current density 0.4 mA/cm², 2nd - 3rd cycle: current density 0.5 mA/cm², 4-5th cycle: current density 0.8 mA/cm², 6-7th cycle: current density 1.0 mA/cm², 8-10th cycle: current density of 1.6 mA/cm², 11-13th cycle: current density of 2.0 mA/cm². Also, in FIG. 3i, _ ⁻0.4 > 0.5 > 0.8 > 1 > 1.6 > 2 > 2.5mA/cm² indicates 1st cycle: current density 0.4 mA/cm², 2nd - 3rd cycle: current density 0.5 mA/cm², 4-5th cycle: current density 0.8 mA/cm², 6-7th cycle: current density 1.0 mA/cm², 8-10th cycle: current density of 1.6 mA/cm², 11-13th cycle: current density of 2.5 mA/cm².

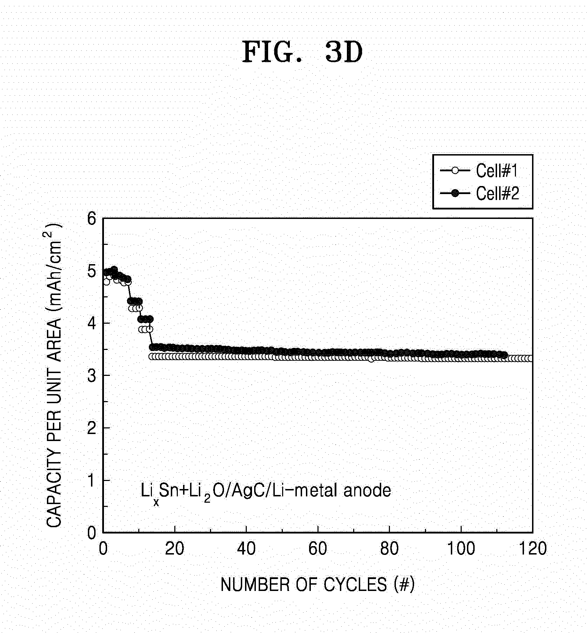

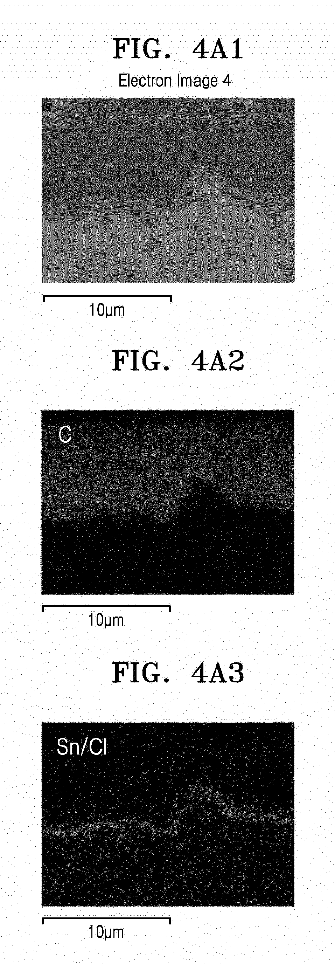

The all-solid secondary batteries of Examples 1 and 2 were each found to maintain a stable interlayer during charge and discharge, as shown in FIGS. 4A1-4A3 and 4B1-4B3, respectively. In addition, the all-solid secondary battery of Example 2, as shown in FIGS. 3C and 3D, was found to have improved lifespan characteristics, as compared with the all-solid secondary battery of Comparative Example 1 shown in FIG. 3F and the all-solid secondary battery of Comparative Example 2 shown in FIG. 31. The all-solid secondary battery of Example 2 with similar results as shown in FIG. 3D. In Fig. 3D, "Cell#1" and "Cell#2" are two all-solid-state secondary batteries of Example 2 having the same configuration.

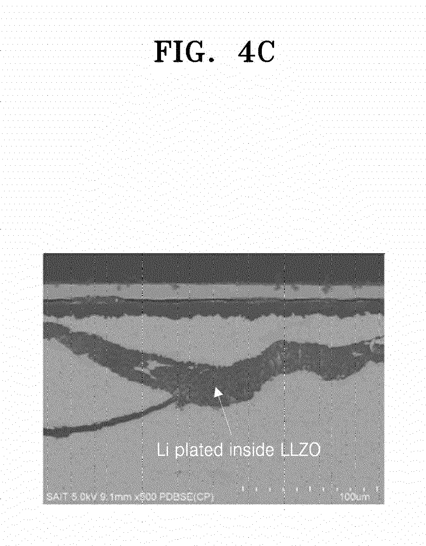

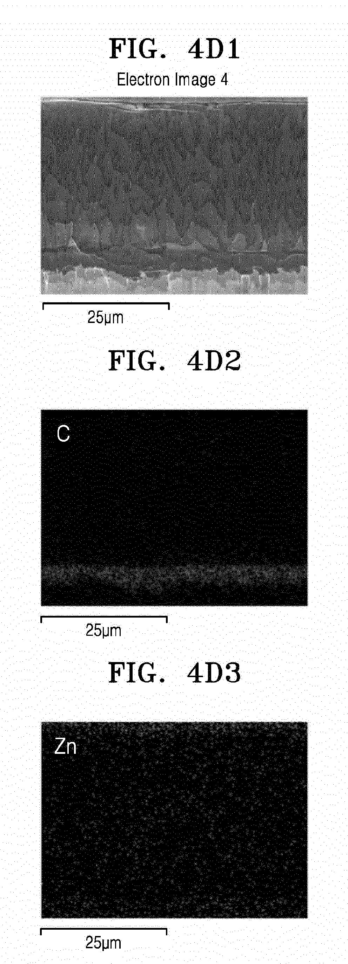

As shown in FIG. 4C, in the interlayer of the all-solid secondary battery of Comparative Example 1, the surface of the solid electrolyte was not completely covered, and short circuit of the battery was not prevented. As shown in FIGS. 4D1-4D3, in the all-solid secondary battery of Comparative Example 2, the interlayer was not maintained, and the lithium metal was dissolved.

### Evaluation Example 4: Charge/discharge test (II)

Charge/discharge characteristics of the all-solid secondary batteries of Examples 3 and 4 and Comparative Example 3 were evaluated by the following charge/discharge test. In the charge/discharge test, charging and discharging were performed while changing the current density at a temperature of 25 °C to identify driving characteristics in a high current density state of the all-solid secondary batteries.

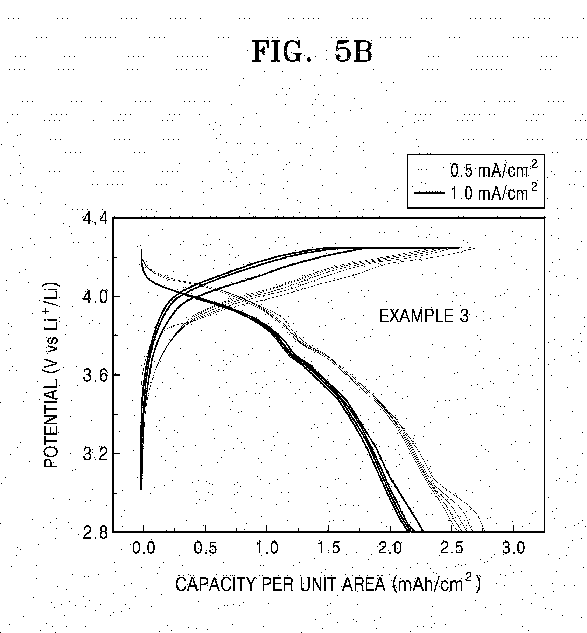

The partial results of charge/discharge test are shown in FIGS. 5B to FIG. 5D.

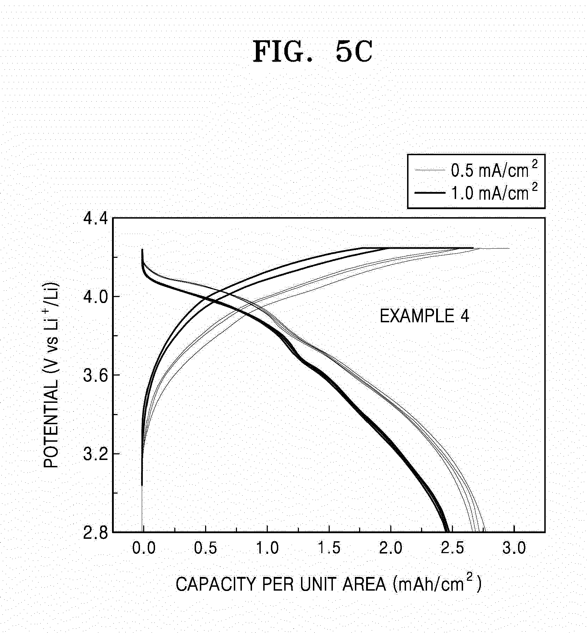

As shown in FIGS. 5B and FIG. 5C, in the all-solid secondary batteries of Examples 3 and 4 were found to be stably driven to 0.5 mA/cm². and 1.0 mA/cm². without occurrence of short circuit, respectively.

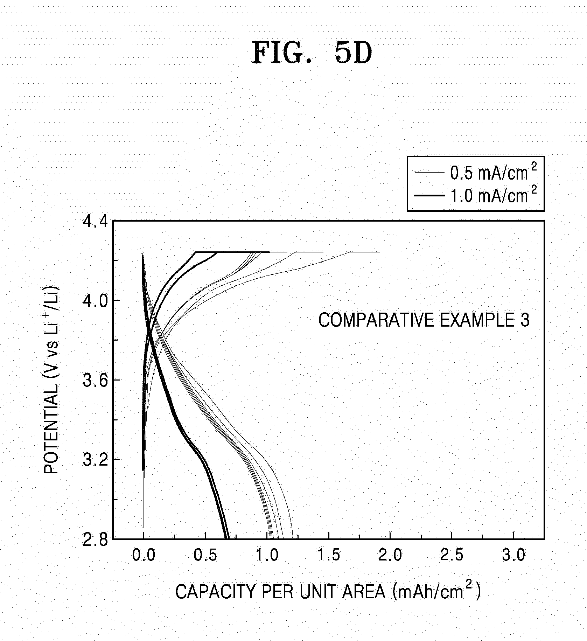

On the other hand, as shown in FIG. 5D, the all-solid secondary battery of Comparative Example 3 was found to have lowered driving stability, as compared with the all-solid secondary batteries of Examples 3 and 4. Accordingly, when a negative electrode has a multi-layered structure as in the all-solid secondary batteries of Examples 3 and 4, a volumetric change that may occur during charge and discharge may be alleviated, and a local concentration of current at high current densities may be reduced. Thus, short circuits of the all-solid secondary batteries were prevented.

### Evaluation Example 5: XPS analysis

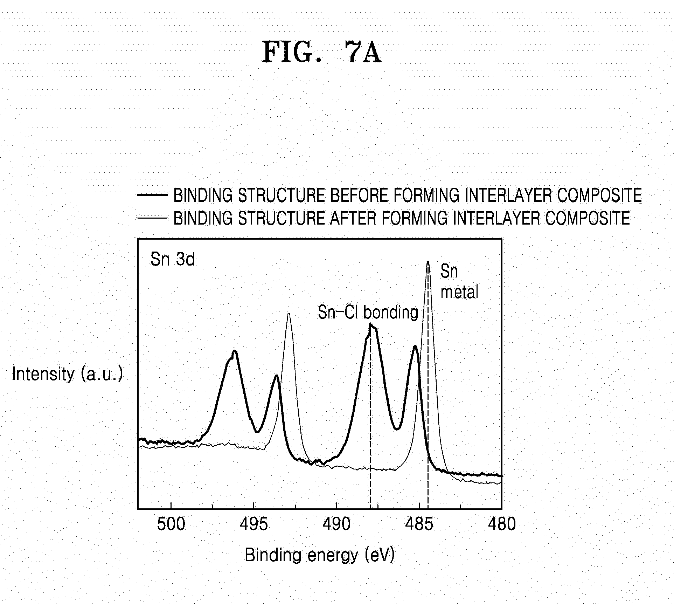

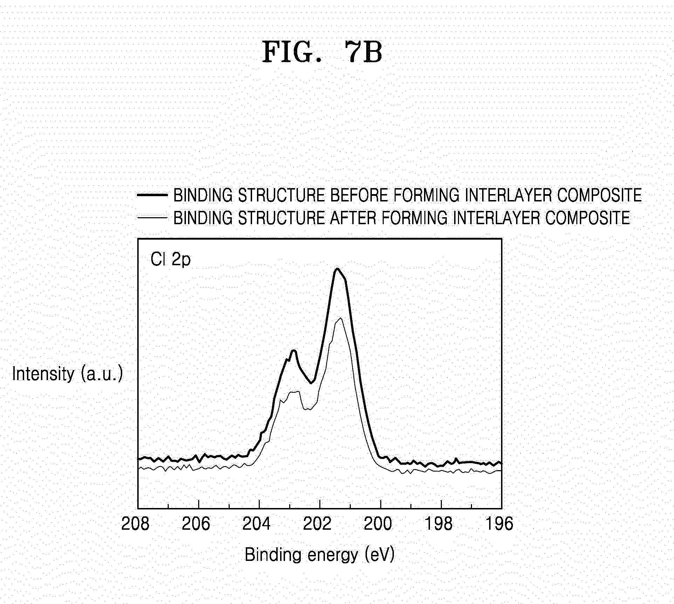

XPS analysis was performed on the composite, which is an interlayer-forming material prepared in Example 1. The results of the analysis are shown in FIGS. 7A and 7B. FIGS. 7A and 7B are the XPS analysis result for Sn and CI, respectively.

As shown in FIG. 7A, The Sn-CI bond disappeared, and metal Sn was formed. Further, as shown in FIG. 7B, the CI component was maintained. that is, the Sn-CI bond disappeared, but a Li-CI bond was formed. As a result, the composition of the composite was identified.

### Evaluation Example 6: TEM-EDS and TEM-EELS analysis

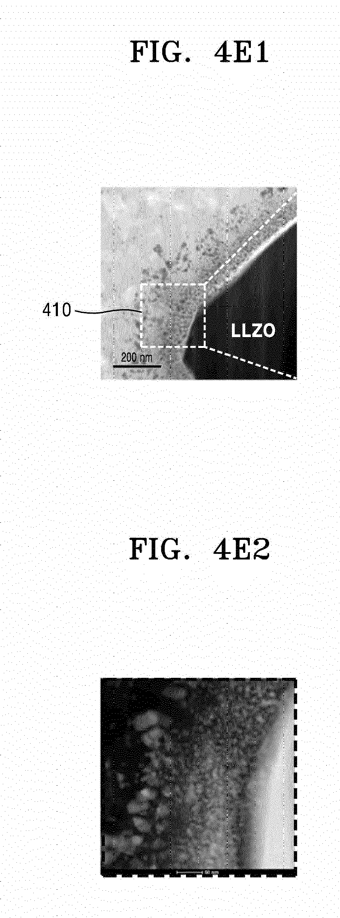

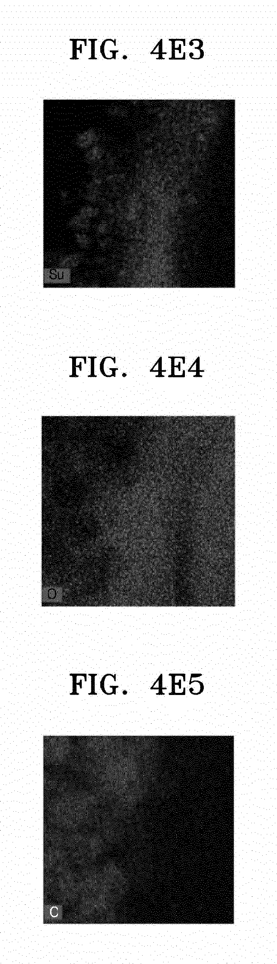

The all-solid secondary battery prepared in Example 2 was charged, and the laminate of solid electrolyte/interlayer/first negative active material layer/second negative active material layer was subjected to transmission electron microscopy/energy dispersive X-Ray spectroscopy (TEM/EDS) analysis. The results thereof are shown in FIGS. 4E1-4E5.

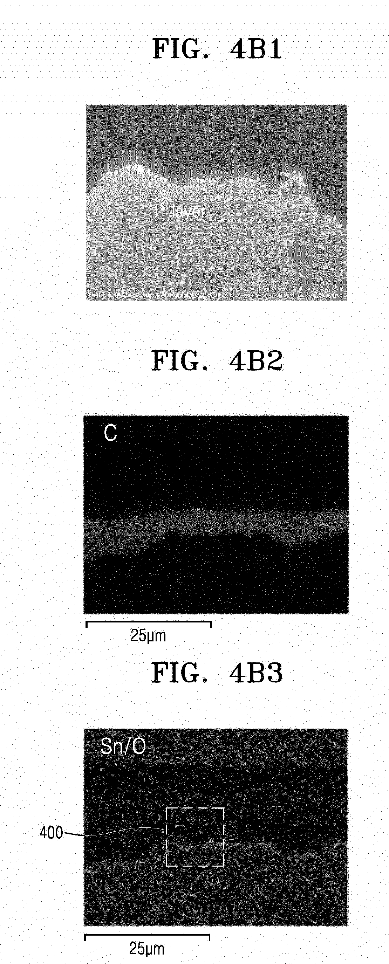

FIGS. 4E1-4E5 show the results of TEM/EDS analysis on the laminate, and FIG. 4E1 is an enlarged view of the indicated area 400 in FIG. 4B3.

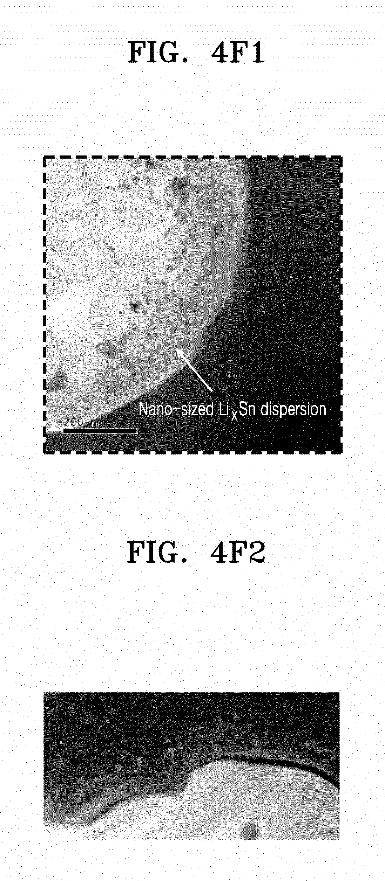

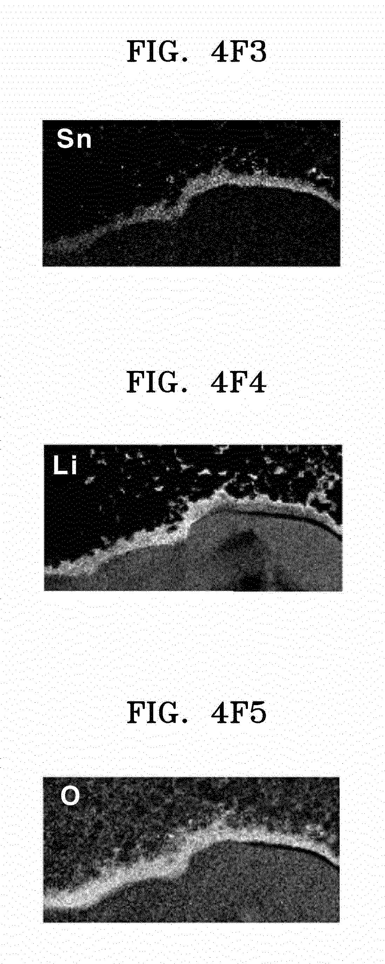

As shown in FIGS. 4B1-4B3, according to Example 2, the interlayer (Layer 1), the first negative active material layer (Layer 2), and the second negative active material layer (Layer 3) were sequentially formed between the solid electrolyte and the negative electrode current collector. As shown in FIG. 4E1, black dots (Li-Sn alloy) that are continuously distributed were present in the white portion (lithium ion conductor matrix, Li₂O) in the indicated area 410. In FIGS. 4E1-4E5, it was found that the interlayer contained tin (Sn) and oxygen (O) and that the first negative active material layer contained carbon (C). As shown in FIGS. 4F1-4F5, it was found that Li-Sn alloy particles having a diameter in a range of 1 nm to 100 nm in the interlayer were uniformly distributed in the continuous Li₂O ion conductor matrix.

As apparent from the foregoing description, in the negative electrode for an all-solid secondary battery according to one or more embodiments, lithium may be uniformly distributed. Thus, an all-solid secondary battery may have alleviated volume expansion, rate capability, and lifespan characteristics may be manufactured.

Hereinbefore, to help understanding of the present disclosure, embodiments of an all-solid secondary battery and a method of manufacturing the all-solid secondary battery have been described and shown in the accompanying drawings. However, it should be understood that these Examples are merely illustrative of the present disclosure and do not limit the present disclosure. It should be understood that the present disclosure is not limited to the description shown and described. This is because various other modifications may be possible to one of ordinary skill in the art.

It should be understood that embodiments described herein should be considered in a descriptive sense only and not for purposes of limitation. Descriptions of features or aspects within each embodiment should be considered as available for other similar features or aspects in other embodiments. While one or more embodiments have been described with reference to the figures, it will be understood by those of ordinary skill in the art that various changes in form and details may be made therein without departing from the scope as defined by the following claims.

## Claims

1. A negative electrode-solid electrolyte sub-assembly for an all-solid secondary battery, the sub-assembly comprising:
a negative electrode current collector;
a first negative active material layer on the current collector;
an interlayer on the first negative active material layer; and
a solid electrolyte on the interlayer and opposite the first negative active material layer,
wherein the interlayer comprises a composite comprising a first metal material and a lithium ion conductor, wherein the first metal material comprises a first metal, an alloy comprising the first metal and lithium, a compound comprising the first metal and lithium, or a combination thereof, wherein the first negative active material layer comprises a carbonaceous negative active material, and optionally a first negative active material comprising a second metal, a metalloid, or a combination thereof.

2. The negative electrode-solid electrolyte sub-assembly of claim 1, wherein a thickness of the interlayer is 1 micrometer or less; and/or
wherein a thickness of the first negative active material layer is in a range of 1 micrometer to 10 micrometers; and/or
wherein a volume of the first negative active material layer after charging the all-solid secondary battery is 200 percent or less than a volume of the first negative active material layer after discharging; and/or
wherein the first metal is tin, indium, silicon, gallium, aluminum, titanium, zirconium, niobium, germanium, antimony, bismuth, zinc, gold, platinum, palladium, nickel, iron, cobalt, chromium, magnesium, cesium, cerium, molybdenum, silver, sodium, potassium, calcium, yttrium, tantalum, hafnium, barium, vanadium, strontium, tellurium, lanthanum, or a combination thereof; and/or
wherein the first metal material is a Li-Ag alloy, a Li-Au alloy, a Li-AI alloy, a Li-Sn alloy, a Li-In alloy, a Li-Zn alloy, a Li-Ge alloy, a Li-Si alloy, a Li-Sb alloy, a Li-Bi alloy, a Li-Ga alloy, a Li-Na alloy, a Li-K alloy, a Li-Te alloy, a Li-Mg alloy, a Li-Mo alloy, a Li-Sn-Bi alloy, a Li-Sn-Ag alloy, a Li-Sn-Na alloy, a Li-Sn-K alloy, a Li-Sn-Ca alloy, a Li-Te-Ag alloy, a Li-Sb-Ag alloy, a Li-Sn-Sb alloy, a Li-Sn-V alloy, a Li-Sn-Ni alloy, a Li-Sn-Cu alloy, a Li-Sn-Zn alloy, a Li-Sn-Ga alloy, a Li-Sn-Ge alloy, a Li-Sn-Sr alloy, a Li-Sn-Y alloy, a Li-Sn-Ba alloy, a Li-Sn-Au alloy, a Li-Sn-La alloy, a Li-AI-Ga alloy, a Li-Mg-Sn alloy, a Li-Mg-Al alloy, a Li-Mg-Si alloy, a Li-Mg-Zn alloy, a Li-Mg-Ga alloy, a Li-Mg-Ag alloy, or a combination thereof; and/or
wherein the lithium ion conductor is LiCI, LiBr, Lil, LiF, Li₂O, Li₂O₂, Li₃N, LiN₃, LiNO₃, LiClO₄, Li₃P, Li₃P₇, LiP, LiP₇, Li₃PO₄, Li₂S, LiS₄, LiOH, Li₂CO₃, or a combination thereof.

3. The negative electrode-solid electrolyte sub-assembly of claims 1 or 2, wherein the composite comprises the first metal material dispersed in a matrix comprising the lithium ion conductor;
preferably:
(i) wherein a size of the first metal material is in a range of 0.1 nanometer to 300 nanometers; and/or
(ii) wherein the matrix is a continuous phase.

4. The negative electrode-solid electrolyte sub-assembly of any of claims 1-3,
wherein the negative electrode-solid electrolyte sub-assembly further comprises a second negative active material layer between the negative electrode current collector and the first negative active material layer, and the second negative active material layer comprises a third metal material, and the third metal material comprises at least one metal of lithium, a third metal, a lithium alloy, or a combination thereof;
preferably wherein the third metal comprises at least one metal of , silver, tin, indium, silicon, gallium, aluminum, titanium, zirconium, niobium, germanium, antimony, bismuth, zinc, gold, platinum, palladium, nickel, iron, cobalt, chromium, magnesium, cesium, cerium, molybdenum, lanthanum, tungsten, tellurium, or a combination thereof,
and the lithium alloy comprising lithium and silver, tin, indium, silicon, gallium, aluminum, titanium, zirconium, niobium, germanium, antimony, bismuth, zinc, gold, platinum, palladium, nickel, iron, cobalt, chromium, magnesium, cesium, cerium, molybdenum, lanthanum, tungsten, tellurium, or a combination thereof;
preferably wherein the third metal is lithium, a lithium alloy, or a combination thereof.

5. The negative electrode-solid electrolyte sub-assembly of any of claims 1-4, wherein the carbonaceous negative active material comprises amorphous carbon, and the first negative active material comprises indium, silicon, gallium, tin, aluminum, titanium, zirconium, niobium, germanium, antimony, bismuth, gold, platinum, palladium, magnesium, palladium, silver, zinc, nickel, iron, cobalt, chromium, cesium, cerium, molybdenum, sodium, potassium, calcium, yttrium, bismuth, tantalum, hafnium, barium, vanadium, strontium, tellurium, lanthanum or a combination thereof; and/or,
wherein a content of the lithium ion conductor in the composite is in a range of 0.1 part by weight to 95 parts by weight, based on 100 parts by weight of the composite; and/or
wherein the interlayer is in contact with the solid electrolyte.

6. The negative electrode-solid electrolyte sub-assembly of any of claims 1-5, wherein the first negative active material layer comprises:
a composite of a first particle comprising amorphous carbon and a second particle comprising a metal or a metalloid; or
a mixture of a first particle comprising amorphous carbon, and a second particle comprising a metal or a metalloid,
wherein a content of the second particle is in a range of 1 weight percent to 60 weight percent, based on a total weight of the composite or the mixture.

7. An all-solid secondary battery comprising:
a positive electrode; and
the negative electrode-solid electrolyte sub-assembly of any one of claims 1 to 6 on the positive electrode;
wherein the solid electrolyte is between the positive electrode and the negative electrode;
preferably wherein the negative electrode current collector, the interlayer, the first negative active material layer, or a region therebetween is a lithium metal-free region that does not comprise lithium metal.

8. The all-solid secondary battery of claim 7, wherein the solid electrolyte comprises an oxide solid electrolyte, a sulfide solid electrolyte, or a combination thereof.
preferably:
(i) wherein the oxide solid electrolyte is Li_{1+x+y}AlₓTi₂₋ₓSi_{y}P_{3-y}O₁₂ wherein 0<x<2 and 0≤y<3, Li₃PO₄, LiₓTi_{y}(PO₄)₃ wherein 0<x≤2 and 0<y≤3, LiₓAl_{y}Ti_{z}(PO₄)₃ wherein 0<x≤2, 0<y≤1, and 0<z≤3, Li_{1+x+y}(Al_{1-z}Ga_{z})ₓ(Ti₁₋ₚGeₚ)₂₋ₓSi_{y}P_{3-y}O₁₂ wherein 0≤x≤1, 0≤y≤1, 0≤z≤1, and 0≤p≤1, LiₓLa_{y}TiO₃ wherein 0<x≤2 and 0<y≤3, Li₂O, LiOH, Li₂CO₃, LiAlO₂, Li₂O-Al₂O₃-SiO₂-P₂O₅-TiO₂-GeO₂, Li₃₊ₓLa₃M₂O₁₂ wherein M is Te, Nb, Zr, or combination thereof, and x is an integer from 1 to 10, or a combination thereof; and/or
(ii) wherein the oxide solid electrolyte is a garnet-type solid electrolyte, and the garnet-type solid electrolyte comprises an oxide represented by Formula 2:
Formula 2 (LiₓM1_{y})(Laₐ₁M2ₐ₂)_{3-δ}(Zr_{b1}M3_{b2})_{2-ω}O_{12-z}X_{z}
wherein, in Formula 2, M1 is hydrogen, iron, gallium, aluminum, boron, beryllium, or a combination thereof,
M2 is barium, calcium, strontium, yttrium, bismuth, praseodymium, neodymium, actinium, samarium, gadolinium, or a combination thereof,
M3 is hafnium, tin, niobium, titanium, vanadium, chromium, manganese, cobalt, nickel, copper, molybdenum, tungsten, tantalum, magnesium, technetium, ruthenium, palladium, iridium, scandium, cadmium, indium, antimony, tellurium, thallium, platinum, silicon, aluminum, or a combination thereof,
6≤x≤8, 0≤y<2, -0.2≤δ≤0.2, -0.2≤ω≤0.2, and 0≤z≤2
a1+a2=1, 0<a1≤1, and 0≤a2<1,
b1+b2=1, 0<b1≤1, and 0≤b2<1, and
X is a monovalent anion, a divalent anion, a trivalent anion, or a combination thereof; and/or
(iii) wherein the oxide solid electrolyte is an oxide represented by Formula 3:
Formula 3 Li₃₊ₓLa₃Zr₂₋ₐMaO₁₂
wherein, in Formula 3, M is Al, Ga, In, Si, Ge, Sn, Sb, Bi, Sc, Y, Ti, Hf, V, Nb, Ta, W, or a combination thereof, and
x is an integer from 1 to 10, and 0≤a<2; and/or
(iv) wherein the sulfide solid electrolyte is Li₂S-P₂S₅, Li₂S-P₂S₅-LiX, wherein X is a halogen element, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ, wherein m and n are each a positive number, Z is Ge, Zn, or Ga, Li₂S-GeS₂, Li₂S-SiS₂-Li₃PO₄, Li₂S-SiS₂-LiₚMO_{q}, wherein p and q are each a positive number, M is one of P, Si, Ge, B, Al, Ga, or In, Li₇₋ₓPS₆₋ₓClₓ wherein 0<x<2, Li₇₋ₓPS₆₋ₓBrₓ wherein 0<x<2, Li₇₋ₓPS₆₋ₓIₓ wherein 0<x<2, or a combination thereof.

9. A method of preparing an all-solid secondary battery, the method comprising:
providing a positive electrode;
disposing a solid electrolyte on the positive electrode;
disposing an interlayer on the solid electrolyte opposite the positive electrode;
disposing a first negative active material layer on the interlayer, the first negative active material layer comprising
a carbonaceous negative active material, and
optionally a first negative active material comprising a second metal, a metalloid, or a combination thereof; and
disposing a current collector on the first negative active material layer opposite the interlayer to prepare the all-solid secondary battery.

10. The method of claim 9, wherein the disposing the interlayer comprises:
depositing a first metal on the solid electrolyte in an atmosphere of oxygen, nitrogen, or a combination of oxygen and nitrogen, to form a first layer comprising a first metal oxide layer, a first metal nitride layer, or a first metal nitrate layer, or a combination thereof; and using the first layer with lithium to dispose a composite comprising a lithium ion conductor and a first metal material comprising a first metal, an alloy comprising the first metal and lithium, a compound comprising the first metal and lithium, or a combination thereof, to dispose the interlayer; and/or
wherein the disposing the interlayer comprises:
depositing a first metal on the solid electrolyte in an atmosphere of oxygen, nitrogen, or a combination of oxygen and nitrogen, to form a first layer comprising a first metal oxide layer, a first metal nitride layer, or a first metal nitrate layer, or a combination thereof; and contacting the first layer with lithium to dispose a composite comprising a lithium-first metal alloy and a lithium ion conductor, to dispose the interlayer.

11. The method of claims 9 or 10, wherein the disposing the interlayer comprises:
depositing a first metal on the solid electrolyte to form a deposited first metal;
contacting the deposited first metal with a compound comprising a halide to form a first metal halide or a mixture of the first metal and the halide, to form a coated solid electrolyte; and
drying the coated solid electrolyte to dispose the interlayer, wherein the interlayer comprises a composite comprising a lithium-first metal alloy and a lithium ion conductor comprising a lithium halide;
preferably wherein the compound comprising a halide is HCI, HBr, HF, HI, or a combination thereof, and the first metal halide is SnClₓ wherein 0<x≤6, SnBrₓ wherein 0<x≤6, SnFx wherein 0<x≤6, SnIₓ wherein 0<x≤6, BiCl₃, Bi₆Cl₇, BiBrx wherein 0<x≤6, BiFx wherein 0<x≤6, Bilx wherein 0<x≤6, AgFx wherein 0<x≤4, AgClx wherein 0<x≤2, AgBrₓ wherein 0<x≤2, AgIₓ wherein 0<x≤2, or a combination thereof.

12. The method of any of claims 9-11, wherein the disposing of the first negative active material layer comprises:
providing a first substrate;
coating a composition on the first substrate, the composition comprising
a carbonaceous negative active material, and
optionally a first negative active material comprising a second metal, a metalloid, or a combination thereof, to provide a coated first substrate;
drying the coated first substrate to provide a dried coated substrate;
disposing the dried coated substrate on the interlayer; and
removing the substrate to dispose the first negative active material layer.

13. The method of any of claims 9-12, wherein, during charge of the all-solid secondary battery, the second metal in the first negative active material layer forms an alloy with lithium.

14. The method of any of claims 9-13, further comprising disposing a second negative active material layer between the negative current collector and the first negative active material layer,
wherein the second negative active material layer comprises a third metal, and the third metal is at least one metal of lithium, silver, tin, indium, silicon, gallium, aluminum, titanium, zirconium, niobium, germanium, antimony, bismuth, zinc, gold, platinum, palladium, nickel, iron, cobalt, chromium, magnesium, cesium, cerium, molybdenum, lanthanum, tungsten tellurium, a lithium alloy comprising lithium and silver, tin, indium, silicon, gallium, aluminum, titanium, zirconium, niobium, germanium, antimony, bismuth, zinc, gold, platinum, palladium, nickel, iron, cobalt, chromium, magnesium, cesium, cerium, molybdenum, lanthanum, tungsten, tellurium, or a combination thereof;
preferably wherein the second negative active material layer is a product of charging of the all-solid secondary battery, disposing the negative electrode current collector with the second negative active material layer to the first negative active material layer, or a combination thereof,
wherein the second negative active material layer is a lithium metal, a lithium alloy, or a combination thereof.

15. An all-solid secondary battery comprising:
a positive electrode; and
a negative electrode-solid electrolyte sub-assembly;
wherein the solid electrolyte is between the positive electrode and the negative electrode,
wherein the negative electrode-solid electrolyte sub-assembly comprises
a negative electrode current collector,
a first negative active material layer on the current collector,
an interlayer on the first negative active material layer, and
a solid electrolyte on the interlayer and opposite the first negative active material layer,
wherein the interlayer comprises a composite comprising a first metal material and a lithium ion conductor, wherein the first metal material comprises a first metal, an alloy comprising the first metal and lithium, a compound comprising the first metal and lithium, or a combination thereof,
wherein the first negative active material layer comprises
a carbonaceous negative active material, and
optionally a first negative active material comprising a second metal, a metalloid, or a combination thereof, and
wherein the negative electrode-solid electrolyte sub-assembly further comprises a second negative active material layer between the negative electrode current collector and the first negative active material layer;
preferably wherein the second negative active material layer comprises a third metal material, and the third metal material comprises at least one metal of lithium, a third metal, a lithium alloy, or a combination thereof;
preferably wherein the third metal comprises at least one metal of , silver, tin, indium, silicon, gallium, aluminum, titanium, zirconium, niobium, germanium, antimony, bismuth, zinc, gold, platinum, palladium, nickel, iron, cobalt, chromium, magnesium, cesium, lanthanum, tungsten, tellurium, or a combination thereof,
and the lithium alloy comprising lithium and silver, tin, indium, silicon, gallium, aluminum, titanium, zirconium, niobium, germanium, antimony, bismuth, zinc, gold, platinum, palladium, nickel, iron, cobalt, chromium, magnesium, cesium, lanthanum, tungsten, tellurium, or a combination thereof.
